# EUROPEAN PATENT APPLICATION

(11) **EP 4 845 217 A1**
(43) Date of publication of application: **25.11.2026**
(21) Application number: 25747598.8
(22) Date of filing: 20.01.2025
(51) Int. Cl.: H04W 36/00

(54) **COMMUNICATION METHOD AND APPARATUS**

(30) Priority: 31.01.2024 CN 202410143657
(71) Applicant: Huawei Technologies Co., Ltd., Shenzhen, Guangdong 518129 (CN)
(72) Inventor: LI, Guanglei, Shenzhen, Guangdong 518129 (CN); LIAO, Ting, Shenzhen, Guangdong 518129 (CN); ZONG, Zaifeng, Shenzhen, Guangdong 518129 (CN)
(74) Representative: Huawei European IPR
(86) International application number: PCT/CN2025/073357
(87) International publication number: WO 2025/162026

(57) **Abstract**

Embodiments of this application provide a communication method and apparatus, and relate to the communication field, to resolve a connection problem between an access network device and a terrestrial core network caused by movement of the access network device. The method includes: A first network element serves as a proxy for an access network device and communicates with a core network. When a first user plane tunnel that is established between the first network element and a user plane network element and that is used to carry user plane data of a terminal device exists, the first network element may determine, based on a first message used for handover of the terminal device, a second user plane tunnel that is between the terminal device and a target access network device and that is used to carry the user plane data of the terminal device, to switch and manage a user plane tunnel on an access network device side.

## Description

This application claims priority to Chinese Patent Application No. 202410143657.7, filed with the China National Intellectual Property Administration on January 31, 2024 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

With the development of satellite communication technologies, integration of satellite networks and 5th generation (5th generation, 5G) mobile communication networks emerges, and wider coverage of satellite communication can provide communication services in some areas, such as oceans and forests, that cannot be covered by terrestrial networks. The 3rd generation partnership project (3rd generation partnership project, 3GPP) has supported use of a satellite as a radio frequency module of a terrestrial access network device to provide a transparent forwarding capability.

In addition, 3GPP is also considering support data processing on satellites, that is, considers that a satellite provides a non-transparent forwarding capability, also referred to as a regenerative capability. Specifically, deployment of an access network device or deployment of an access network device and a user plane network element on satellites is being considered. Accordingly, a terminal device may access a terrestrial core network through the access network device deployed on the satellite, or through the access network device and the user plane network element deployed on the satellite.

However, under existing functions of the access network device and core network elements, if the access network device deployed on the satellite communicates with the terrestrial core network by using a same connection mechanism as that used between the terrestrial access network device and a core network, movement of the access network device may lead to a connection problem between the access network device and the terrestrial core network. Therefore, how to resolve the connection problem between the access network device and the terrestrial core network caused by movement of the satellite has become an urgent problem to be resolved.

### SUMMARY

Embodiments of this application provide a communication method and apparatus, to resolve a connection problem between an access network device and a terrestrial core network caused by movement of a satellite under existing functions of the access network device and a core network element.

To achieve the foregoing objective, this application uses the following technical solutions.

According to a first aspect, a communication method is provided. The method may be performed by a first network element, may be performed by a part of the first network element, for example, a processor, a chip, or a chip system of the first network element, or may be implemented by a logical module or software that can implement all or a part of the first network element. An example in which the method is performed by the first network element is used below for description. The method includes: The first network element receives a first message. The first message is used for handover of a terminal device, and a first user plane tunnel used to carry user plane data of the terminal device is established between the first network element and a serving user plane network element of the terminal device. The first network element sends a first tunnel address of the first network element to a target access network device of the terminal device based on the first message. The first tunnel address is used to establish a second user plane tunnel, and the second user plane tunnel is used to carry the user plane data of the terminal device between the target access network device and the first network element.

Based on the communication method, the first network element serves as a proxy for an access network device and communicates with a core network. When the first user plane tunnel that is established between the first network element and the user plane network element and that is used to carry the user plane data of the terminal device exists, the first network element may determine, based on the first message used for handover of the terminal device, the second user plane tunnel that is between the terminal device and the target access network device and that is used to carry the user plane data of the terminal device, to switch a user plane tunnel on an access network device side, without a need to switch the tunnel between the first network element and the user plane network element, so that user plane connection management can be implemented, and signaling overheads can be reduced.

In a possible design solution, that the first network element receives the first message may include: The first network element receives the first message from the target access network device, where the first message is a path switch request message. In this way, the communication method provided in this embodiment of this application is applicable to a scenario in which handover is performed based on an X2 or Xn interface. To be specific, after the terminal device is handed over to the target access network device, the first network element may trigger switching and connection management of the user plane tunnel based on the path switch request message of the target access network device.

In a possible design solution, the first message may include a tunnel address of the target access network device, and the tunnel address of the target access network device is used to establish the second user plane tunnel.

In a possible design solution, that the first network element sends the first tunnel address of the first network element to the target access network device of the terminal device based on the first message may include: The first network element sends the first tunnel address of the first network element to the target access network device based on the tunnel address of the target access network device. In this way, the first network element may configure, based on the tunnel address of the target access network device in the first message, a tunnel address that is of the first network element and that is used to establish a user plane tunnel between the first network element and the target access network device.

In a possible design solution, that the first network element sends the first tunnel address of the first network element to the target access network device based on the first message may include: The first network element sends first indication information to a mobility management network element based on the first message, where the first indication information indicates that handover of the terminal device between access network devices occurs within a service range of the first network element. The first network element receives second indication information from the mobility management network element, where the second indication information indicates that a tunnel address of the user plane network element remains unchanged. The first network element sends the first tunnel address of the first network element to the target access network device based on the second indication information. In this way, after receiving the path switch message, the first network element may further notify, by using the first indication information, the mobility management network element that handover between access network devices occurs within the service range of the first network element, so that the mobility management network element does not need to change the tunnel address of the user plane network element. Further, the first network element may trigger, based on the second indication information fed back by the mobility management network element, the first network element to configure a tunnel address used by the first network element to establish a user plane tunnel between the first network element and the target access network device.

In a possible design solution, the first indication information may include a second tunnel address that is of the first network element and that corresponds to the first user plane tunnel and/or an identifier of the first network element. In this way, the first indication information may provide an indication by reusing an existing tunnel address or identifier, to reduce signaling overheads.

In a possible design solution, the second indication information may include a first tunnel address that is of the user plane network element and that corresponds to the first user plane tunnel. In this way, the first indication information may also provide an indication by reusing an existing tunnel address, to reduce signaling overheads.

In a possible design solution, the first tunnel address of the first network element may be the same as a third tunnel address that is of the first network element and that corresponds to a third user plane tunnel, and the third user plane tunnel is used to carry the user plane data of the terminal device between a source access network device of the terminal device and the first network element. In this way, the first tunnel address of the first network element may reuse the third tunnel address that is of the first network element and that corresponds to the third user plane tunnel between the source access network device and the first network element, to reduce a waste of tunnel resources.

In a possible design solution, that the first network element receives the first message may include: The first network element receives the first message from a source access network device of the terminal device, where the first message is a handover required message. In this way, the communication method provided in this embodiment of this application is further applicable to handover that is performed based on an S1 or N2 interface. To be specific, the first network element may trigger, based on the handover required message from the source access network device, switching and connection management of the user plane tunnel when triggering handover of the terminal device between access network devices.

In a possible design solution, that the first network element sends the first tunnel address of the first network element to the target access network device of the terminal device based on the first message may include: The first network element sends first indication information to a mobility management network element based on the first message, where the first indication information indicates that handover of the terminal device between access network devices occurs within a service range of the first network element. The first network element receives a second tunnel address of the user plane network element from the mobility management network element, where the second tunnel address of the user plane network element is determined based on a first tunnel address that is of the user plane network element and that corresponds to the first user plane tunnel. The first network element sends the first tunnel address of the first network element to the target access network device based on the second tunnel address of the user plane network element. In this way, after receiving the first message, the first network element may send the first indication information to the mobility management network element, to indicate the mobility management network element to perform handover-related internal logic determining (for example, whether a service supports handover or allows handover) and feed back the second tunnel address of the user plane network element after internal logic determining. The second tunnel address of the user plane network element is obtained by the mobility management network element through filtering based on the first tunnel address that is of the user plane network element and that corresponds to the established first user plane tunnel, or is obtained by the mobility management network element by canceling a part of the established first user plane tunnel. Therefore, the first network element may configure the first tunnel address of the first network element based on the second tunnel address of the user plane network element, to implement switching and connection management of the user plane tunnel.

In a possible design solution, the first indication information may be carried in a handover required message, and the second tunnel address of the user plane network element is carried in a handover request message.

In a possible design solution, after the first network element sends the first tunnel address of the first network element to the target access network device of the terminal device based on the first message, the method according to the first aspect may further include: The first network element receives a tunnel address of the target access network device from the target access network device, where the tunnel address of the target access network device is used to establish the second user plane tunnel. The first network element determines a fourth tunnel address of the first network element based on the tunnel address of the target access network device, where the fourth tunnel address of the first network element is used to establish a fourth user plane tunnel, and the fourth user plane tunnel is used to carry the user plane data of the terminal device between the first network element and the user plane network element. The first network element sends the fourth tunnel address of the first network element to the mobility management network element. In this way, after sending the first tunnel address of the first network element to the target access network device, the first network element may further receive the tunnel address of the target access network device. The tunnel address of the target access network device is determined by the target access network device by filtering services for handover based on a resource usage status of the target access network device. Therefore, the first network element may determine the fourth tunnel address of the first network element based on the tunnel address of the target access network device. The fourth tunnel address of the first network element is included in the first tunnel address of the first network element, to update the established first user plane tunnel.

In a possible design solution, after the first network element sends the fourth tunnel address of the first network element to the mobility management network element, the method according to the first aspect may further include: The first network element receives third indication information from the mobility management network element, where the third indication information indicates to release a resource of a third user plane tunnel, and the third user plane tunnel is used to carry the user plane data of the terminal device between the source access network device and the first network element. The first network element releases the resource of the third user plane tunnel based on the third indication information. In this way, after completing switching configuration of the user plane tunnel, the first network element may further release, based on triggering of the mobility management network element, a tunnel resource before handover, to increase a storage capacity.

In a possible design solution, in a process in which the terminal device initiates an attach/registration, a tracking area update TAU, or a service request SR within a coverage range of the source access network device, the method according to the first aspect may further include: The first network element receives the first tunnel address of the user plane network element from the mobility management network element, where the first tunnel address of the user plane network element is used to establish the first user plane tunnel. The first network element determines the third tunnel address of the first network element based on the first tunnel address of the user plane network element, where the third tunnel address of the first network element is used to establish the third user plane tunnel, and the third user plane tunnel is used to carry the user plane data of the terminal device between the source access network device and the first network element. The first network element sends the third tunnel address of the first network element to the source access network device. In this way, the first network element may allocate, to the terminal device in an attach/registration, TAU, or SR procedure initiated by the terminal device, a resource used to establish a user plane tunnel between the source access network device and the first network element, to establish the user plane tunnel that carries the user plane data of the terminal device.

In a possible design solution, after the first network element sends the third tunnel address of the first network element to the source access network device, the method according to the first aspect may further include: The first network element receives a tunnel address of the source access network device from the source access network device, where the tunnel address of the source access network device is used to establish the third user plane tunnel. The first network element determines the second tunnel address of the first network element based on the tunnel address of the source access network device, where the second tunnel address of the first network element is used to establish the first user plane tunnel. The first network element sends the second tunnel address of the first network element to the mobility management network element. In this way, the first network element may allocate, to the terminal device in an attach/registration, TAU, or SR procedure initiated by the terminal device, a resource used to establish a user plane tunnel between the first network element and the user plane network element, to establish the user plane tunnel that carries the user plane data of the terminal device.

In a possible design solution, the first network element is a proxy.

According to a second aspect, a communication method is provided. The method may be performed by a first network element, may be performed by a part of the first network element, for example, a processor, a chip, or a chip system of the first network element, or may be implemented by a logical module or software that can implement all or a part of the first network element. An example in which the method is performed by the first network element is used below for description. The method includes: The first network element receives a second message from a first access network device, where the second message is used to notify the first network element that the first access network device is to move out of a service area of the first network element, the first network element is configured to serve as a proxy for at least two access network devices to communicate with a mobility management network element, and the at least two access network devices include the first access network device. In response to the second message, when there is at least one access network device, in the at least two access network devices and other than the first access network device, whose coverage area is located within the service area, the first network element maintains a connection between the first network element and the mobility management network element; or when there is no access network device, in the at least two access network devices, whose coverage area is located within the service area, the first network element sends a third message to the mobility management network element, where the third message is for releasing a connection between the first network element and the mobility management network element.

Based on the communication method, the first network element communicates with the mobility management network element by serving as a proxy for the at least two access network devices within the service area of the first network element. When the first access network device in the service area of the first network element disconnects a connection to the first network element because the first access network device is to move out of the service area, the first network element may determine whether there is still at least one other access network device, in the service area of the first network element, for which the first network element serves as a proxy and whose coverage area is located within the service area, to determine whether to disconnect the connection to the mobility management network element. In this way, in an aspect, an incorrect operation and maintenance management system alarm caused by unavoidable disconnection due to movement of an access network device can be avoided; and in another aspect, disconnection between another access network device and the mobility management network element caused by movement of an access network device can be avoided, so that the another access network device does not need to re-establish a connection to the mobility management network element, and therefore signaling overheads can be reduced.

In a possible design solution, the second message may be a shutdown message in the stream control transmission protocol SCTP. In other words, the second message may reuse an existing defined message to indicate that the first access network device is to move out of the service area or disconnects the connection to the first network element, to reduce signaling overheads.

In a possible design solution, the second message may include fourth indication information, the fourth indication information indicates that the first access network device is to move out of the service area of the first network element, and the fourth indication information is a tracking area identity TAI having a preset value and corresponding to an area covered by the first access network device before the first access network device moves out of the service area. In this way, the fourth indication information may provide an indication by using the TAI with a special value, to reduce signaling overheads.

In a possible design solution, the method according to the second aspect may further include: The first network element sends a TAI corresponding to the service area to the mobility management network element. In this way, the first network element may send coverage information of the first network element to the mobility management network element, so that the mobility management network element performs mobility management on the first network element.

In a possible design solution, the TAI corresponding to the service area may include TAIs corresponding to coverage areas supported, in different service time periods, by each of the at least two access network devices, that is, the TAI sent by the first network element is further associated with a time period in which an area corresponding to the TAI is covered. In other words, the coverage information of the first network element includes coverage information of an access network device that the first network element manages or serves as a proxy for.

In a possible design solution, the method according to the second aspect may further include: The first network element sends fifth indication information to the mobility management network element, where the fifth indication information indicates that a coverage area indicated by the TAI corresponding to the service area is continuously covered by an access network device. When there are sufficient access network devices to provide coverage, the first network element may send the fifth indication information to the mobility management network element, to improve service continuity.

In a possible design solution, the first network element is a proxy.

According to a third aspect, a communication method is provided. The method may be performed by a first network element, may be performed by a part of the first network element, for example, a processor, a chip, or a chip system of the first network element, or may be implemented by a logical module or software that can implement all or a part of the first network element. An example in which the method is performed by the first network element is used below for description. The method is applied to a case in which a terminal device requests to be handed over from a source access network device to a target access network device, and includes: A first network element receives a fourth message from the source access network device, where the first network element is configured to serve as a proxy for the source access network device to communicate with a first mobility management network element corresponding to the first network element, and the fourth message includes an identifier of the target access network device and a tracking area identity TAI corresponding to the target access network device. The first network element sends an identifier of a second network element to the first mobility management network element based on the identifier of the target access network device and the TAI corresponding to the target access network device, where the second network element is configured to serve as a proxy for the target access network device and communicate with a second mobility management network element corresponding to the second network element.

Based on the communication method, in a scenario in which handover is performed across proxy service areas, the first network element corresponding to a service area in which a coverage area of the source access network device is located may determine, based on the identifier and the TAI of the target access network device, the second network element corresponding to a service area in which a coverage area of the target access network device is located, to trigger the mobility management network element corresponding to the second network element to indicate the terminal device to be handed over from the source access network device to the target access network device.

In a possible design solution, that the first network element sends the identifier of the second network element to the first mobility management network element based on the identifier of the target access network device and a TAI corresponding to a coverage area of the target access network device may include: The first network element determines, based on the TAI corresponding to the coverage area of the target access network device, that a coverage range of the target access network device is not within a service area of the first network element. The first network element sends the identifier of the second network element to the first mobility management network element based on the identifier of the target access network device and a first correspondence, where the first correspondence includes a correspondence between the target access network device and the second network element.

In a possible design solution, the first network element and the second network element are PROXY.

According to a fourth aspect, a communication method is provided. The method may be performed by a first mobility management network element, may be performed by a part of the first mobility management network element, for example, a processor, a chip, or a chip system of the first mobility management network element, or may be implemented by a logical module or software that can implement all or a part of the first mobility management network element. An example in which the method is performed by the first mobility management network element is used below for description. The method is applied to a case in which a terminal device requests to be handed over from a source access network device to a target access network device, and includes: The first mobility management network element receives an identifier of a second network element from a first network element, where the first network element is configured to serve as a proxy for the source access network device to communicate with the first mobility management network element, and the second network element is configured to serve as a proxy for the target access network device and communicate with a second mobility management network element corresponding to the second network element. The first mobility management network element sends a fifth message to the second mobility management network element through the first network element and the second network element based on the identifier of the second network element, where the fifth message is for requesting the second mobility management network element to trigger handover of the terminal device to the target access network device.

In a possible design solution, the first network element and the second network element are PROXY.

For descriptions of technical effect of the method according to the fourth aspect, refer to the descriptions of technical effect of the method according to the third aspect. Details are not described herein again.

According to a fifth aspect, a communication apparatus is provided, to implement the foregoing methods. The communication apparatus may be the first network element in the first aspect, an apparatus including the first network element, or an apparatus, for example, a chip, included in the first network element. The communication apparatus includes a corresponding module, unit, or means (means) for implementing the method according to the first aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to control the transceiver module to receive a first message. The first message is used for handover of a terminal device, and a first user plane tunnel used to carry user plane data of the terminal device is established between the communication apparatus and a serving user plane network element of the terminal device. The processing module is configured to control the transceiver module to send a first tunnel address of the communication apparatus to a target access network device of the terminal device based on the first message. The first tunnel address is used to establish a second user plane tunnel, and the second user plane tunnel is used to carry the user plane data of the terminal device between the target access network device and the communication apparatus.

In a possible design solution, that the processing module is configured to control the transceiver module to receive the first message may include: The processing module is configured to control the transceiver module to receive the first message from the target access network device, where the first message is a path switch request message.

In a possible design solution, the first message may include a tunnel address of the target access network device, and the tunnel address of the target access network device is used to establish the second user plane tunnel.

In a possible design solution, that the processing module is configured to control the transceiver module to send the first tunnel address of the communication apparatus to the target access network device of the terminal device based on the first message may include: The processing module is configured to control the transceiver module to send the first tunnel address of the communication apparatus to the target access network device based on the tunnel address of the target access network device.

In a possible design solution, that the processing module is configured to control the transceiver module to send the first tunnel address of the communication apparatus to the target access network device based on the first message may include: The processing module is configured to control the transceiver module to send first indication information to a mobility management network element based on the first message, where the first indication information indicates that handover of the terminal device between access network devices occurs within a service range of the communication apparatus. The processing module is configured to control the transceiver module to receive second indication information from the mobility management network element, where the second indication information indicates that a tunnel address of the user plane network element remains unchanged. The processing module is configured to control the transceiver module to send the first tunnel address of the communication apparatus to the target access network device based on the second indication information.

In a possible design solution, the first indication information may include a second tunnel address that is of the communication apparatus and that corresponds to the first user plane tunnel and/or an identifier of the first network element.

In a possible design solution, the second indication information may include a first tunnel address that is of the user plane network element and that corresponds to the first user plane tunnel.

In a possible design solution, the first tunnel address of the communication apparatus may be the same as a third tunnel address that is of the communication apparatus and that corresponds to a third user plane tunnel, and the third user plane tunnel is used to carry the user plane data of the terminal device between a source access network device of the terminal device and the communication apparatus.

In a possible design solution, that the processing module is configured to control the transceiver module to receive the first message may include: The processing module is configured to control the transceiver module to receive the first message from a source access network device of the terminal device, where the first message is a handover required message.

In a possible design solution, that the processing module is configured to control the transceiver module to send the first tunnel address of the communication apparatus to the target access network device of the terminal device based on the first message may include: The processing module is configured to control the transceiver module to send first indication information to a mobility management network element based on the first message, where the first indication information indicates that handover of the terminal device between access network devices occurs within a service range of the communication apparatus. The processing module is configured to control the transceiver module to receive a second tunnel address of the user plane network element from the mobility management network element, where the second tunnel address of the user plane network element is determined based on a first tunnel address that is of the user plane network element and that corresponds to the first user plane tunnel. The processing module is configured to control the transceiver module to send the first tunnel address of the communication apparatus to the target access network device based on the second tunnel address of the user plane network element.

In a possible design solution, the first indication information may be carried in a handover required message, and the second tunnel address of the user plane network element is carried in a handover request message.

In a possible design solution, after the processing module is configured to control the transceiver module to send the first tunnel address of the communication apparatus to the target access network device of the terminal device based on the first message, the processing module is further configured to control the transceiver module to receive a tunnel address of the target access network device from the target access network device, where the tunnel address of the target access network device is used to establish the second user plane tunnel. The processing module is configured to control the transceiver module to determine a fourth tunnel address of the communication apparatus based on the tunnel address of the target access network device, where the fourth tunnel address of the communication apparatus is used to establish a fourth user plane tunnel, and the fourth user plane tunnel is used to carry the user plane data of the terminal device between the communication apparatus and the user plane network element. The processing module is configured to control the transceiver module to send the fourth tunnel address of the communication apparatus to the mobility management network element.

In a possible design solution, after the processing module is configured to control the transceiver module to send the fourth tunnel address of the communication apparatus to the mobility management network element, the processing module is further configured to control the transceiver module to receive third indication information from the mobility management network element, where the third indication information indicates to release a resource of a third user plane tunnel, and the third user plane tunnel is used to carry the user plane data of the terminal device between the source access network device and the communication apparatus. The processing module is configured to control the transceiver module to release the resource of the third user plane tunnel based on the third indication information.

In a possible design solution, in a process in which the terminal device initiates an attach/registration, a tracking area update TAU, or a service request SR within a coverage range of the source access network device, the processing module is further configured to control the transceiver module to receive the first tunnel address of the user plane network element from the mobility management network element, where the first tunnel address of the user plane network element is used to establish the first user plane tunnel. The processing module is configured to control the transceiver module to determine the third tunnel address of the communication apparatus based on the first tunnel address of the user plane network element, where the third tunnel address of the communication apparatus is used to establish the third user plane tunnel, and the third user plane tunnel is used to carry the user plane data of the terminal device between the source access network device and the communication apparatus. The processing module is configured to control the transceiver module to send the third tunnel address of the communication apparatus to the source access network device.

In a possible design solution, after the processing module is configured to control the transceiver module to send the third tunnel address of the communication apparatus to the source access network device, the processing module is further configured to control the transceiver module to receive a tunnel address of the source access network device from the source access network device, where the tunnel address of the source access network device is used to establish the third user plane tunnel. The processing module is further configured to control the transceiver module to determine the second tunnel address of the communication apparatus based on the tunnel address of the source access network device, where the second tunnel address of the communication apparatus is used to establish the first user plane tunnel. The processing module is further configured to control the transceiver module to send the second tunnel address of the communication apparatus to the mobility management network element.

In a possible design solution, the communication apparatus is a proxy.

According to a sixth aspect, a communication apparatus is provided, to implement the foregoing methods. The communication apparatus may be the first network element in the second aspect, an apparatus including the first network element, or an apparatus, for example, a chip, included in the first network element. The communication apparatus includes a corresponding module, unit, or means (means) for implementing the method according to the second aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to control the transceiver module to receive a second message from a first access network device, where the second message is used to notify the communication apparatus that the first access network device is to move out of a service area of the communication apparatus, the communication apparatus is configured to serve as a proxy for at least two access network devices to communicate with a mobility management network element, and the at least two access network devices include the first access network device. In response to the second message, when there is at least one access network device, in the at least two access network devices and other than the first access network device, whose coverage area is located within the service area, the processing module is configured to maintain a connection between the communication apparatus and the mobility management network element; or when there is no access network device, in the at least two access network devices, whose coverage area is located within the service area, the processing module is configured to control the transceiver module to send a third message to the mobility management network element, where the third message is for releasing a connection between the communication apparatus and the mobility management network element.

In a possible design solution, the second message may include fourth indication information, the fourth indication information indicates that the first access network device is to move out of the service area of the communication apparatus, and the fourth indication information is a tracking area identity TAI having a preset value and corresponding to an area covered by the first access network device before the first access network device moves out of the service area.

In a possible design solution, the processing module is further configured to control the transceiver module to send a TAI corresponding to the service area to the mobility management network element.

In a possible design solution, the TAI corresponding to the service area may include TAIs corresponding to coverage areas supported, in different service time periods, by each of the at least two access network devices.

In a possible design solution, the processing module is further configured to send fifth indication information to the mobility management network element, where the fifth indication information indicates that a coverage area indicated by the TAI corresponding to the service area is continuously covered by an access network device.

In a possible design solution, the communication apparatus is a proxy.

According to a seventh aspect, a communication apparatus is provided, to implement the foregoing methods. The communication apparatus may be the first network element in the third aspect, an apparatus including the first network element, or an apparatus, for example, a chip, included in the first network element. The communication apparatus includes a corresponding module, unit, or means (means) for implementing the method according to the third aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to control the transceiver module to receive a fourth message from a source access network device, where the communication apparatus is configured to serve as a proxy for the source access network device to communicate with a first mobility management network element corresponding to the communication apparatus, and the fourth message includes an identifier of a target access network device and a tracking area identity TAI corresponding to the target access network device. The processing module is configured to control the transceiver module to send an identifier of a second network element to the first mobility management network element based on the identifier of the target access network device and the TAI corresponding to the target access network device, where the second network element is configured to serve as a proxy for the target access network device and communicate with a second mobility management network element corresponding to the second network element.

In a possible design solution, that the processing module is configured to control the transceiver module to send the identifier of the second network element to the first mobility management network element based on the identifier of the target access network device and a TAI corresponding to a coverage area of the target access network device may include: The processing module is configured to determine, based on the TAI corresponding to the coverage area of the target access network device, that a coverage range of the target access network device is not within a service area of the communication apparatus. The processing module is configured to control the transceiver module to send the identifier of the second network element to the first mobility management network element based on the identifier of the target access network device and a first correspondence, where the first correspondence includes a correspondence between the target access network device and the second network element.

In a possible design solution, the communication apparatus and the second network element are PROXY.

According to an eighth aspect, a communication apparatus is provided, to implement the foregoing methods. The communication apparatus may be the first mobility management network element in the fourth aspect, an apparatus including the first mobility management network element, or an apparatus, for example, a chip, included in the first mobility management network element. The communication apparatus includes a corresponding module, unit, or means (means) for implementing the method according to the fourth aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to control a receiving module to receive an identifier of a second network element from a first network element, where the first network element is configured to serve as a proxy for a source access network device to communicate with the communication apparatus, and the first network element is configured to serve as a proxy for a target access network device to communicate with a second mobility management network element corresponding to the second network element. The processing module is configured to control the receiving module to send a fifth message to the second mobility management network element through the first network element and the second network element based on the identifier of the second network element, where the fifth message is for requesting the second mobility management network element to trigger handover of the terminal device to the target access network device.

In a possible design solution, the first network element and the second network element are PROXY.

With reference to any one of the fifth aspect to the eighth aspect, in a possible design solution, the transceiver module may include a receiving module and a sending module. The sending module is configured to implement a sending function of the communication apparatus according to the fifth aspect to the eighth aspect, and the receiving module is configured to implement a receiving function of the communication apparatus according to the fifth aspect to the eighth aspect.

With reference to any one of the fifth aspect to the eighth aspect, in a possible design solution, the communication apparatus according to the second aspect may further include a storage module, and the storage module stores a program or instructions. When the processing module executes the program or the instructions, the communication apparatus according to any one of the fifth aspect to the eighth aspect is enabled to perform the method according to any one of the first aspect to the fourth aspect.

According to a ninth aspect, a communication apparatus is provided (for example, the communication apparatus may be a chip or a chip system). The communication apparatus includes a processor, configured to implement functions in any one of the foregoing aspects.

In a possible design solution, the communication apparatus may further include a memory, and the memory is configured to store necessary program instructions and data. The processor is coupled to the memory, and the processor is configured to execute a computer program or instructions stored in the memory, to enable the communication apparatus to perform the method according to any one of the possible implementations of the first aspect to the fourth aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In a possible design solution, the processor may be integrated with the memory.

In some possible designs, when the apparatus is a chip system, the chip system may include a chip, or may include a chip and another discrete component.

According to a tenth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the possible implementations of the first aspect to the fourth aspect by using a logic circuit or by executing code instructions.

It may be understood that when the communication apparatus provided in any one of the ninth aspect or the tenth aspect is a chip, the foregoing sending action/function may be understood as output, and the foregoing receiving action/function may be understood as input.

According to an eleventh aspect, a computer-readable storage medium is provided. The computer-readable storage medium stores a computer program or instructions. When the computer program or the instructions are run on a communication apparatus, the communication apparatus is enabled to perform the method according to any one of the first aspect to the fourth aspect.

According to a twelfth aspect, a computer program product including instructions is provided. The computer program product includes computer program code. When the computer program code is run on a communication apparatus, the communication apparatus is enabled to perform the method according to any one of the first aspect to the fourth aspect.

According to a thirteenth aspect, a communication system is provided. The communication system includes a first network element configured to implement the method according to the first aspect or the second aspect.

According to a fourteenth aspect, a communication system is provided. The communication system includes a first network element configured to implement the method according to the third aspect and a first mobility management network element configured to implement the method according to the fourth aspect.

### BRIEF DESCRIPTION OF DRAWINGS

FIG. 1a and FIG. 1b are diagrams of architectures of satellite communication in a regenerative mode;
FIG. 2 is a diagram of an architecture of a communication system according to an embodiment of this application;
FIG. 3a and FIG. 3b are diagrams of system architectures that are applicable to the communication system shown in FIG. 2 and that are based on an EPC architecture and a 5GC architecture according to an embodiment of this application;
FIG. 4a and FIG. 4b are diagrams of architectures of user plane and control plane protocol stacks based on an EPC architecture according to an embodiment of this application;
FIG. 5a and FIG. 5b are diagrams of architectures of user plane and control plane protocol stacks based on a 5GC architecture according to an embodiment of this application;
FIG. 6 is a schematic flowchart of a communication method according to an embodiment of this application;
FIG. 7 is a schematic flowchart of another communication method according to an embodiment of this application;
FIG. 8 is a schematic flowchart of still another communication method according to an embodiment of this application;
FIG. 9 is a schematic flowchart of still another communication method according to an embodiment of this application;
FIG. 10 is a diagram of a structure of user plane tunnel switching according to an embodiment of this application;
FIG. 11 is a schematic flowchart of still another communication method according to an embodiment of this application;
FIG. 12 is a schematic flowchart of still another communication method according to an embodiment of this application;
FIG. 13 is a schematic flowchart of still another communication method according to an embodiment of this application;
FIG. 14a and FIG. 14b are a schematic flowchart of still another communication method according to an embodiment of this application;
FIG. 15 is a schematic flowchart of still another communication method according to an embodiment of this application;
FIG. 16 is a diagram of an architecture of a communication apparatus according to an embodiment of this application; and
FIG. 17 is a diagram of an architecture of another communication apparatus according to an embodiment of this application.

### DESCRIPTION OF EMBODIMENTS

All aspects, embodiments, or features are presented in embodiments of this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be further used.

Technical solutions in embodiments of this application may be applied to various communication systems, for example, an internet of things (internet of things, IoT) system, a wireless fidelity (wireless fidelity, Wi-Fi) system, a vehicle to everything (vehicle to everything, V2X) communication system, a device-to-device (device-to-device, D2D) communication system, an internet of vehicles communication system, a worldwide interoperability for microwave access (worldwide interoperability for microwave access, WiMAX) communication system, a 4th generation (4th generation, 4G) mobile communication system such as a long term evolution (long term evolution, LTE) system, a worldwide interoperability for microwave access (worldwide interoperability for microwave access, WiMAX) communication system, a 5G mobile communication system such as a new radio (new radio, NR) system, and a future communication system.

For ease of understanding, the following first describes related technologies in embodiments of this application.

### 1. Satellite communication

Compared with terrestrial communication, satellite communication has unique advantages. For example, satellite communication can provide a wider coverage range, and an access network device deployed on a satellite is not vulnerable to natural disasters or external forces. 5G communication has capabilities such as high bandwidth, high reliability, low latency, and ubiquitous access. Convergence of satellite communication and 5G communication can bring the following advantages: Satellite communication can be introduced to provide communication services for some areas that cannot be covered by terrestrial communication networks, such as oceans and forests. Reliability of 5G communication is enhanced. For example, it is ensured that airplanes, trains, and users on these means of transportation obtain higher-quality communication services. More data transmission resources are provided for 5G communication to improve a network rate. Therefore, supporting both terrestrial communication and satellite communication is an inevitable trend of future 5G communication, and has great benefits in terms of wide coverage, reliability, massive connectivity, high throughput, and the like.

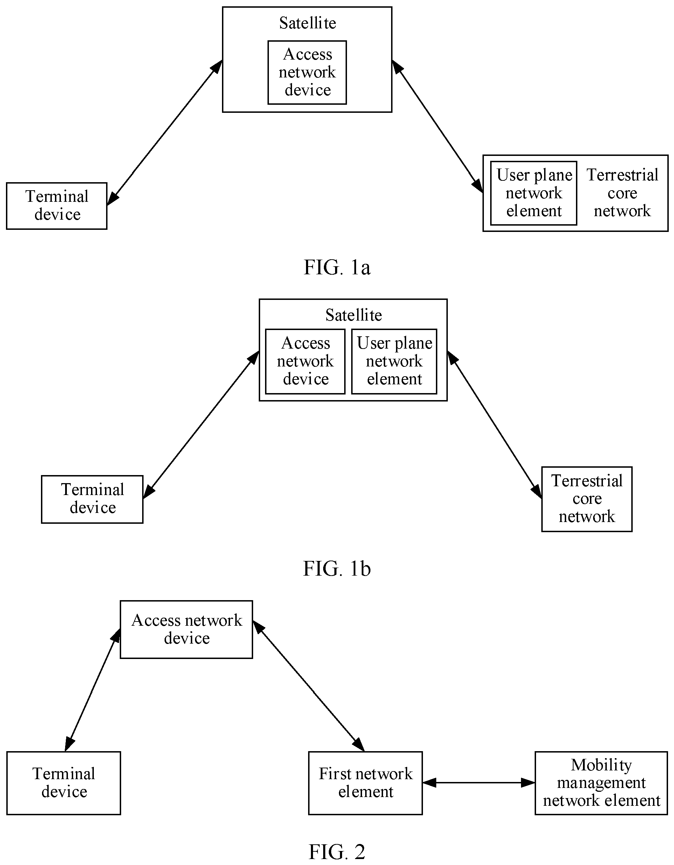

In 3rd generation partnership project (3rd generation partnership project, 3GPP), satellites can be usually classified into two types based on operating modes. A first type is transparent forwarding (transparent) satellites. The satellite is used as a radio frequency module of a terrestrial access network device, for example, forwards cell information of the terrestrial access network device, to implement radio frequency filtering, frequency conversion, and amplification. In this case, the satellite is mainly used as a layer 1 relay (L1 relay) to regenerate a physical layer signal, and does not have another higher protocol layer. A second type is regenerative (regenerative) satellites. The satellite has a processing function of an access network device. As shown in FIG. 1a or FIG. 1b, considering that an access network device is deployed on the satellite or an access network device and a user plane network element are deployed on the satellite, a terminal device may access a terrestrial core network through the access network device deployed on the satellite or the access network device and the access network device that are deployed on the satellite. A link between the satellite and the terminal device may be referred to as a service link (service link), and an interface between the terminal device and the access network device corresponds to a Uu interface defined in 3GPP. A link between the satellite and the terrestrial core network may be referred to as a feeder link, and the feeder link carries an interface between the access network device and the terrestrial core network, or an interface between the access network device and the user plane network element and an interface between the user plane network element and the terrestrial core network.

In embodiments of this application, an access network device deployed on a satellite may also be referred to as a satellite-borne access network device, and a user plane network element deployed on a satellite may also be referred to as a satellite-borne user plane network element. This is not limited herein.

It should be understood that, in an evolved packet core (evolved packet core, EPC) architecture, that is, a 4G core network architecture, a user plane network element is mainly a serving gateway (serving gateway, S-GW) and/or a packet data network (packet data network, PDN)-gateway (gateway, GW) (P-GW for short); and in a 5G core network (5G core network, 5GC) architecture, a user plane network element is mainly a user plane function (user plane function, UPF), including an anchor UPF (UPF of PDU session anchor, PSA-UPF) or an intermediate UPF (intermediate UPF, I-UPF).

### 2. Mobility management mechanism for satellite access in a transparent forwarding mode

To support satellite access in the transparent forwarding mode, 3GPP defines the following mechanisms for mobility management:
(1) A tracking area code (tracking area code, TAC) broadcast by an access network device over an air interface changes with movement of a satellite, and the TAC corresponds to a terrestrial area. To be specific, each geographical area is classified and assigned a corresponding specific TAC, and when the satellite moves over the geographical area, the TAC corresponding to the geographical area is broadcast.
(2) A cell identifier (cell ID) broadcast by an access network device over an air interface moves with movement of a satellite. However, the access network device maps a logical cell ID (which may be referred to as a mapped cell ID) associated with a terrestrial area and reports the cell ID to a mobility management function (mobility management function, MME)/access and mobility management function (access and mobility management function, AMF) for mobility management (for example, precise paging based on the ID), so that a core network is not greatly different from a terrestrial network during mobility management.

### 3. Coverage area reporting and connection management of an access network device in terrestrial communication

In terrestrial communication (land communication), after being started, the access network device establishes a stream control transmission protocol (stream control transmission protocol, SCTP) connection to an MME or AMF, and needs to report a tracking area identity (tracking area identity, TAI) supported by the access network device (that is, the access network device needs to report information about an area covered by the access network device to a core network).

After the SCTP connection between the access network device and the core network is disconnected, the core network finds that the SCTP connection between the access network device and the core network times out, and an operation and maintenance system may generate alarm information.

### 4. Handover

When a terminal device is in a connected (connected) state, as the terminal device moves, to ensure service continuity, a handover procedure occurs, so that the terminal device is handed over to a different access network device. In a satellite access scenario in a transparent forwarding mode, due to movement of a satellite, to ensure service continuity in the connected state, 3GPP currently defines a handover mechanism. A terrestrial access network device may provide some auxiliary information for a terminal device, including a location or a time window for implementing measurement, so that the terminal device can measure a signal of a neighboring satellite of a current serving satellite in a timely manner, to implement handover in a timely manner. When an access network device is deployed on the satellite, to ensure service continuity in the connected state, handover between access network devices also needs to be performed as the satellite moves.

### 5. Paging

When a terminal device is in an idle (idle) state, a network may need to page the terminal device. A paging message usually carries a TAI, and may further carry a cell ID. After receiving the paging message, an access network device initiates, based on the TAI, paging in all cells that belong to the TAI, or may preferentially send the paging message in a cell specified in the paging message.

In a terrestrial network or a satellite scenario in a transparent forwarding mode, an access network device is deployed on the ground and does not move. When an access network device is deployed on a satellite, that is, a satellite in a regenerative mode, if an interaction manner between an access network device and a core network in terrestrial communication (for example, an EPC architecture or a 5GC architecture) is used, signaling exchange is directly implemented between the access network device deployed on the satellite and a terrestrial core network. However, under existing functions of the access network device and a core network element, due to movement of the access network device, directly implementing signaling exchange between the access network device deployed on the satellite and the terrestrial core network may lead to a connection problem between the access network device and the terrestrial core network. For example, due to movement of the access network device, the terminal device needs to be continuously handed over between access network devices, and how to implement handover connection between the terrestrial core network and the access network device is a problem. For another example, due to normal movement of the access network device, a connection between the access network device and an MME or AMF is frequently disconnected, leading to connection abnormalities.

Therefore, with the existing functions of the access network device and the core network element, how to resolve the connection problem between the access network device and the terrestrial core network caused by movement of the access network device becomes an urgent problem to be resolved.

Therefore, embodiments of this application provide a communication method. With existing functions of an access network device and a core network element, a first network element serves as a proxy for access network devices to communicate with a terrestrial core network, so that a connection problem between the access network device and the terrestrial core network caused by movement of a satellite can be resolved, to reduce signaling exchange.

To better understand embodiments of this application, the following descriptions are provided before embodiments of this application are described.

First, in embodiments of this application, "indicate" may include "directly indicate" and "indirectly indicate". When a piece of "indication information" is described as indicating A, the indication information may directly indicate A or indirectly indicate A, but it does not indicate that the indication information definitely carries A.

Information indicated by indication information is referred to as to-be-indicated information. During specific implementation, the to-be-indicated information is indicated in a plurality of manners, for example, but not limited to, the following manners: The to-be-indicated information, for example, the to-be-indicated information or an index of the to-be-indicated information, may be directly indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated based on an arrangement sequence of pieces of information that is pre-agreed on (for example, specified in a protocol), to reduce indication overheads to some extent. In addition, a common part of all pieces of information may be further identified and indicated in a unified manner, to reduce indication overheads caused by separately indicating same information.

Furthermore, a specific indication manner may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device. The configuration information may include, for example, but not limited to, one or a combination of at least two of radio resource control (radio resource control, RRC) signaling, media access control (media access control, MAC) layer signaling, and physical layer signaling. The MAC layer signaling includes, for example, a MAC control element (control element, CE). The physical (physical, PHY) layer signaling includes, for example, downlink control information (downlink control information, DCI).

Second, numbers such as first and second in embodiments of this application are merely used for differentiation for ease of description, and are not intended to limit the scope of embodiments of this application. For example, the numbers are used to distinguish between different indication information. For another example, first indication information and second indication information are merely used to distinguish between different indication information, and do not limit a sequence of the first indication information and the second indication information. A person skilled in the art may understand that the terms such as "first" and "second" do not limit a quantity or an execution sequence, and the terms such as "first" and "second" do not indicate a definite difference.

Third, in embodiments of this application, descriptions such as "when", "in a case", and "if" mean that a device (for example, a terminal device or an access network device) performs corresponding processing in an objective situation, and are not intended to limit time, and the device (for example, the terminal device or the access network device) is not required to perform a determining action during implementation; and do not mean any other limitation.

In addition, in embodiments of this application, the term "example", "for example", or the like is used to represent giving an example, an illustration, or a description. Any embodiment or design solution described with "example" or "for example" in embodiments of this application should not be explained as being more preferred or having more advantages than another embodiment or design solution. Exactly, use of the term "example", "for example", or the like is intended to present a related concept in a specific manner for ease of understanding.

Finally, a network architecture and a service scenario described in embodiments of this application are intended to describe the technical solutions of embodiments of this application more clearly, and do not constitute a limitation on the technical solutions provided in embodiments of this application. A person of ordinary skill in the art may know: With evolution of the network architecture and emergence of new service scenarios, the technical solutions provided in embodiments of this application are also applicable to similar technical problems.

FIG. 2 is a diagram of an architecture of a communication system to which an embodiment of this application is applied. In an example, as shown in FIG. 2, the communication system includes a terminal device, an access network device, a first network element, and a mobility management network element.

The communication system shown in FIG. 2 may be applied to an LTE system or a long term evolution advanced (LTE advanced, LTE-A) system, or may be applied to a 5G network or another future network. Certainly, the communication system may be further applied to a system of LTE and 5G hybrid networking, a D2D communication system, a machine-to-machine (machine-to-machine, M2M) communication system, an IoT, an internet of vehicles communication system, or another system. This is not specifically limited in embodiments of this application. In different networks, the mobility management network element, the access network device, the terminal device, and the first network element in the communication system shown in FIG. 2 may correspond to different names. A person skilled in the art may understand that the names do not constitute a limitation on the devices.

The following separately describes communication devices and network elements in the communication system.

### 1. Terminal device

There may be one or more terminal devices, for example, a first terminal device, a second terminal device, and a third terminal device. The terminal device may be a terminal device having a transceiver function, or may be a chip or a chip system disposed in the terminal device. The terminal device may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal device in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, an IoT terminal, a computer having a wireless transceiver function, a virtual reality (virtual reality, VR) terminal, an augmented reality (augmented reality, AR) terminal, a smart home device (for example, a refrigerator, a television, an air conditioner, or an electricity meter), a smart robot, a robot arm, a workshop device, a wireless terminal in self-driving, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) or the like having a terminal function, a flight device (for example, a smart robot, a hot-air balloon, an uncrewed aerial vehicle, or an airplane), or the like. The terminal device in this application may alternatively be a vehicle-mounted module, a vehicle-mounted assembly, a vehicle-mounted part, a vehicle-mounted chip, or a vehicle-mounted unit that is built in a vehicle as one or more parts or units. The terminal device may alternatively be another device having a terminal function. For example, the terminal device may alternatively be a device that functions as a terminal in D2D communication.

A device form of the terminal is not limited in embodiments of this application. An apparatus configured to implement a function of the terminal device may be a terminal device, or may be an apparatus, for example, a chip system, that can support the terminal device in implementing the function. The apparatus may be installed in the terminal device or used together with the terminal device. In embodiments of this application, the chip system may include a chip, or may include a chip and another discrete component.

### 2. Access network device

There may be a plurality of access network devices, for example, a first access network device, a second access network device, and a third access network device. The access network device may also be referred to as an access network node, a radio access network (radio access network, RAN) node, a RAN entity, an access node, or the like. The access network device is located on a network side of the communication system, and is configured to help the terminal device implement radio access. The access network device is a device having a wireless transceiver function, or may be disposed in a chip or a chip system of the device. In embodiments of this application, all or some functional modules of the access network device may be deployed on an air-borne platform or a satellite, or may be deployed in another form of high-altitude communication device. Correspondingly, the access network device may be an air-borne platform, a satellite, or another similar device that connects the terminal device to a core network. The air-borne platform may include at least one of the following: a satellite, an uncrewed aerial vehicle, or a hot air balloon.

The access network device includes, but is not limited to, a base station (base station), an evolved NodeB (evolved NodeB, eNodeB/eNB), an access point (access point, AP), a transmission reception point (transmission reception point, TRP or transmission point, TP), a next generation NodeB (next generation NodeB, gNB), a base station in a future mobile communication system, or an access node in a Wi-Fi system. The access network device may be a macro base station, a micro base station or an indoor station, a relay node or a donor node, an open radio access network (open radio access network, ORAN), or a radio controller in a centralized radio access network (centralized radio access network, CRAN) scenario. Alternatively, the access network device may be one antenna panel or a group of antenna panels (including a plurality of antenna panels) of a base station in 5G, or may be a network node that forms a gNB, a TRP, a TP, or a transmission measurement function (transmission measurement function, TMF), for example, a central unit (central unit, CU), a distributed unit (distributed unit, DU), a CU-control plane (control plane, CP), a CU-user plane (user plane, UP), a radio unit (radio unit, RU), or a road side unit (road side unit, RSU) having a base station function. Optionally, the access network device may alternatively be a server, a wearable device, a vehicle, a vehicle-mounted device, or the like. For example, an access network device in a V2X technology may be an RSU. All or some functions of the network device in this application may alternatively be implemented by using a software function running on hardware, or may be implemented by using a virtualized function instantiated on a platform (for example, a cloud platform). The access network device in this application may alternatively be a logical node, a logical module, or software that can implement all or some functions of the access network device.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH). It may be understood that the access network device may be a CU node, a DU node, or a device including a CU node and a DU node. In addition, the CU may be classified as a network device in an access network RAN, or the CU may be classified as a network device in a CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

In embodiments of this application, a form of the access network device is not limited. An apparatus configured to implement a function of the access network device may be an access network device, or may be an apparatus, for example, a chip system, that can support the access network device in implementing the function. The apparatus may be installed in the access network device or used together with the access network device.

### 3. First network element

The first network element serves as a proxy between the access network device and a corresponding core network element, and may be specifically configured to serve as a proxy for the access network device and exchange information with the core network element, or may be configured to serve as a proxy for the core network element and exchange information with the access network device, to implement connection management and the like between the access network device and the core network element. For example, the first network element intercepts and processes S1/N2 signaling, and forwards the S1/N2 signaling to the access network device or the mobility management network element.

In embodiments of this application, the first network element may be independently deployed on the ground, and is in one-to-one logical correspondence with the mobility management network element. In other words, one first network element corresponds to one mobility management network element. In a possible implementation, the first network element may be deployed on a terrestrial gateway as a proxy (agent) mobility management network element. In addition, a name of the first network element is not limited in embodiments of this application. For example, the first network element may also be referred to as a proxy network element, proxy (or proxy), a proxy function (proxy function, PF), a proxy function network element, a network function (network function, NF), or the like.

### 4. Mobility management network element

The mobility management network element is configured to implement access management and mobility management of the terminal device. For example, the mobility management network element is responsible for status maintenance of the terminal device, reachability management of the terminal device, forwarding of a non-mobility management (mobility management, MM) non-access stratum (non-access stratum, NAS) message, forwarding of a session management (session management, SM) N2 message, and the like. In embodiments of this application, the mobility management network element may be an MME in a 4G communication system, and the mobility management network element may be an AMF in a 5G communication system.

It should be understood that the communication system shown in FIG. 2 may further include another core network element, another terminal device, another access network device, or the like, for example, a user plane network element, a session management network element, a data management network element, a policy control network element, or a network data analytics network element. This is not limited. The user plane network element may be an S-GW in a 4G system or a UPF in 5G communication, the session management network element may be a session management function (session management function, SMF) in a 5G system, the data management network element may be a unified data management (unified data management, UDM) in the 5G system, the policy control network element may be a policy control function (policy control function, PCF) in the 5G system, and the network data analytics network element may be a network data analytics function (network data analytics function, NWDAF) in the 5G system.

It should be noted that only manners of communication between some network elements are listed above, and other network elements may also communicate with each other in some connection manners. Details are not described herein in embodiments of this application.

The following describes in detail, with reference to 4G and 5G network architectures, the communication system architecture provided in embodiments of this application.

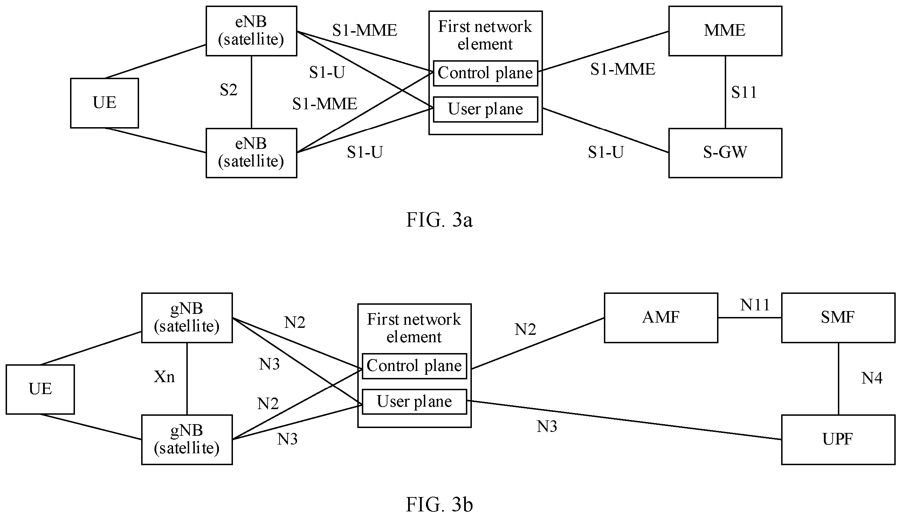

FIG. 3a is a diagram of a system architecture in which an access network device is connected to a core network through a first network element in an EPC architecture, and FIG. 3b is a diagram of a system architecture in which an access network device is connected to a core network through a first network element in a 5GC architecture.

As shown in FIG. 3a, in the EPC architecture, the access network device, for example, an eNB, is connected to an MME and an S-GW through the first network element. An interface between eNBs is an S2 interface. For a control plane, an interface between the eNB and the first network element and an interface between the first network element and the MME are S1-MME interfaces. For a user plane, an interface between the eNB and the first network element and an interface between the first network element and the S-GW are S1-U interfaces. An interface between the MME and the S-GW is an S11 interface.

As shown in FIG. 3b, in the 5GC architecture, the access network device, for example, a gNB, is connected to an AMF and a UPF through the first network element. An interface between gNBs is an S2 interface. For a control plane, an interface between the gNB and the first network element and an interface between the first network element and the AMF are N2 interfaces. For a user plane, an interface between the gNB and the first network element and an interface between the first network element and the UPF are N3 interfaces. An interface between the AMF and an SMF is an N11 interface. An interface between the SMF and the UPF is an N4 interface.

Further, for the foregoing two network architectures, embodiments of this application define control plane and user plane protocol stack architectures applicable to the foregoing two network architectures.

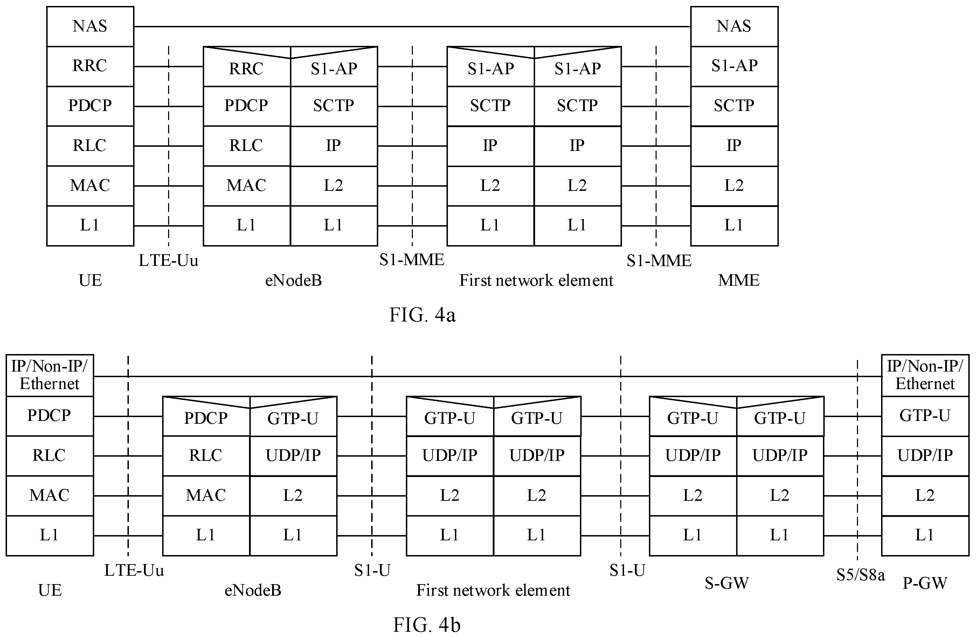

FIG. 4a is a diagram of an architecture of control plane protocol stacks between UE and an eNB, between the eNB and a first network element, and between the first network element and an MME in an EPC architecture, and FIG. 4b is a diagram of an architecture of user plane protocol stacks between UE and an eNB, between the eNB and a first network element, between the first network element and an S-GW, and between the S-GW and a P-GW in an EPC architecture.

As shown in FIG. 4a, peer control plane protocol stacks of the UE and the eNB each sequentially include, from bottom to top, an L1 (physical (physical, PHY) layer), a media access control MAC layer, a radio link control (radio link control, RLC) layer, a packet data convergence protocol (packet data convergence protocol, PDCP) layer, and an RRC layer. In addition, a control plane protocol stack of the UE further includes a NAS layer corresponding to the MME.

Peer control plane protocol stacks of the eNB and the first network element and peer control plane protocol stacks of the first network element and the MME each sequentially include, from bottom to top, an L1, an L2, an internet protocol (internet protocol, IP) layer, an SCTP layer, and an S1 application protocol (S1 application protocol, S1-AP) layer.

As shown in FIG. 4b, peer user plane protocol stacks of the UE and the eNB each sequentially include, from bottom to top, an L1, a MAC layer, an RLC layer, and a PDCP layer. In addition, a user plane protocol stack of the UE further includes an IP/non-IP (non-IP)/ethernet (ethernet) layer corresponding to the P-GW.

Peer user plane protocol stacks of the eNB and the first network element, peer user plane protocol stacks of the first network element and the S-GW, and peer user plane protocol stacks of the S-GW and the P-GW each sequentially include, from bottom to top, an L1, an L2, a user datagram protocol (user datagram protocol, UDP)/IP layer, and a general packet radio service (general packet radio service, GPRS) tunneling protocol-user plane (GPRS tunneling protocol-user plane, GTP-U) layer, where a user plane protocol stack of the P-GW further includes an IP/non-IP (non-IP)/ethernet (ethernet) layer corresponding to the UE.

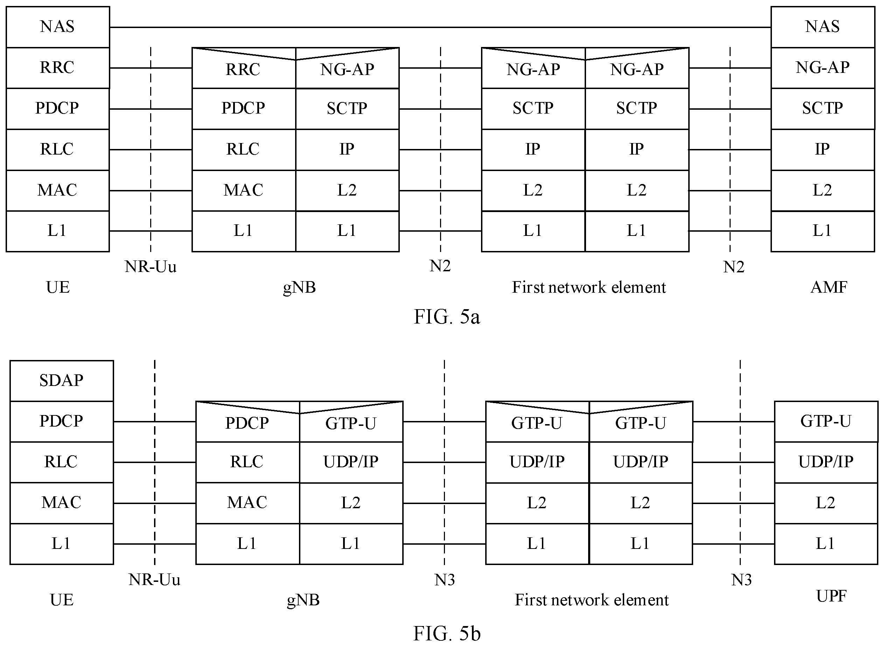

FIG. 5a is a diagram of an architecture of control plane protocol stacks between UE and a gNB, between the gNB and a first network element, and between the first network element and an AMF in a 5GC architecture, and FIG. 5b is a diagram of an architecture of user plane protocol stacks between UE and a gNB, between the gNB and a first network element, between the first network element and a UPF in a 5GC architecture.

As shown in FIG. 5a, similar to the control plane protocol stacks in the EPC architecture, peer control plane protocol stacks of the UE and the gNB each sequentially include, from bottom to top, an L1 (PHY layer), a MAC layer, an RLC layer, a PDCP layer, and an RRC layer. In addition, a control plane protocol stack of the UE further includes a NAS layer corresponding to the AMF.

Peer control plane protocol stacks of the gNB and the first network element and peer control plane protocol stacks of the first network element and the AMF each sequentially include, from bottom to top, an L1, an L2, an IP layer, an SCTP layer, and an NG application protocol (NG application protocol, NG-AP) layer.

As shown in FIG. 5b, similar to the user plane protocol stacks in the EPC architecture, peer user plane protocol stacks of the UE and the gNB each sequentially include, from bottom to top, a PHY layer, a MAC layer, an RLC layer, a PDCP layer, and a service (service) data adaptation protocol (service data adaptation protocol, SDAP) layer; and peer user plane protocol stacks of the gNB and the first network element and peer user plane protocol stacks of the first network element and the UPF each sequentially include, from bottom to top, an L1, an L2, a UDP/IP layer, and a GTP-U layer.

It should be understood that, in embodiments of this application, names of nodes, modules, devices, or network elements in different scenarios, architectures, or systems and a name of a communication interface between any two of the nodes, modules, devices, or network elements are provided as examples, and a possibility of a name change in a future communication system, scenario, or architecture is not excluded.

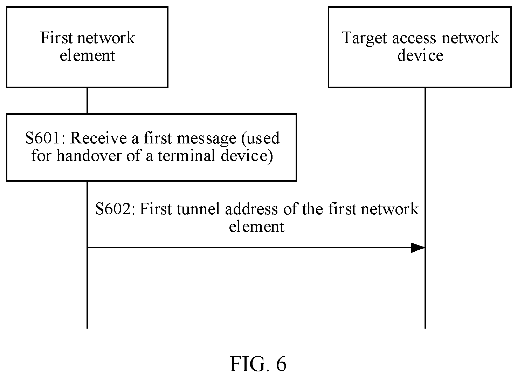

The following specifically describes, with reference to FIG. 6 to FIG. 13, the communication method provided in embodiments of this application. The communication method is described by using communication between the first terminal device, the access network device, the first network element, and the mobility management network element shown in FIG. 2 as an example. Certainly, an action of the terminal device in the method may alternatively be performed by an apparatus/module in the terminal device, for example, a chip, a processor, or a processing unit in the terminal device. This is not limited herein. An action of the access network device in the method may alternatively be performed by an apparatus/module in the access network device, for example, a chip, a processor, or a processing unit in the access network device. This is not limited herein. An action of the first network element in the method may alternatively be performed by an apparatus/module in the first network element, for example, a chip, a processor, or a processing unit in the first network element. This is not limited herein. An action of the mobility management network element in the method may alternatively be performed by an apparatus/module in the mobility management network element, for example, a chip, a processor, or a processing unit in the mobility management network element. This is not specifically limited herein.

For example, as shown in FIG. 6, the communication method includes the following steps.

S601: The first network element receives a first message.

The first message may be used for handover of the terminal device, or the first message may be a message related to handover of the terminal device. Specifically, the first message may be a handover required (handover required) message, a path switch message, or the like.

The handover may be handover of the terminal device between access network devices caused by movement of the terminal device or movement of the access network device. The handover may change a user plane tunnel used to carry user plane data of the terminal device.

In this embodiment of this application, the first network element has a service area, and the first network element may manage or serve as a proxy for an access network device whose coverage area is located within the service area of the first network element to communicate with the mobility management network element. When handover of the terminal device occurs between access network devices that the first network element manages or serves as a proxy for, in other words, both a source access network device and a target access network device of the terminal device are located in the service area of the first network element, a first user plane tunnel used to carry the user plane data of the terminal device is established between the first network element and a serving user plane network element of the terminal device, and the first network element receives the first message to complete switching of the user plane tunnel.

Based on the foregoing procedure, as shown in FIG. 3a, FIG. 3b, FIG. 4b, or FIG. 5b, it can be learned that a tunnel that is established between the source access network device of the terminal device and the user plane network element and that is used to carry the user plane data of the terminal device includes the first user plane tunnel between the first network element and the user plane network element and a third user plane tunnel between the first network element and the source access network device. The first user plane tunnel corresponds to a second tunnel address of the first network element and a tunnel address of the source access network device, and the third user plane tunnel corresponds to a third tunnel address of the first network element and a first tunnel address of the user plane network element. In other words, the first network element allocates a tunnel address (that is, the second tunnel address of the first network element) to the first user plane tunnel established to the user plane network element, and allocates a tunnel address (that is, the third tunnel address of the first network element) to the third user plane tunnel established to the access network device.

It should be understood that, when the terminal device is in a coverage range of the source access network device, the terminal device may initiate an attach (attach) (or (re-)registration (registration)), tracking area update (tracking area update, TAU), or service request (service request, SR) procedure in the coverage range of the source access network device, so that the first network element and the mobility management network element may configure, for the terminal device in the procedure initiated by the terminal device, tunnel information used to establish a user plane tunnel that is between the source access network device and the user plane network element and that is used to carry the user plane data of the terminal device, to transmit the user plane data of the terminal device.

In a possible implementation, the first network element receives the first tunnel address of the user plane network element from the mobility management network element, and determines the third tunnel address of the first network element based on the tunnel address of the user plane network element, so that the first network element sends the third tunnel address of the first network element to the source access network device. The first tunnel address of the user plane network element is used to establish the first user plane tunnel, and the third tunnel address of the first network element is used to establish the third user plane tunnel.

For example, in the attach procedure or the SR procedure, the first tunnel address of the user plane network element may be carried in a first initial context setup request (initial context setup request) message for sending, and the third tunnel address of the first network element may be carried in a second initial context setup request message for sending. The second initial context setup request message may be obtained by the first network element by modifying the first initial context setup request message, for example, replacing the first tunnel address of the user plane network element in the first initial context setup request message with the third tunnel address of the first network element.

Further, after the first network element sends the third tunnel address of the first network element to the source access network device, the first network element may receive the tunnel address of the source access network device from the source access network device, and determine the second tunnel address of the first network element based on the tunnel address of the source access network device, so that the first network element sends the second tunnel address of the first network element to the mobility management network element. The tunnel address of the source access network device is used to establish the third user plane tunnel, and the second tunnel address of the first network element is used to establish the first user plane tunnel.

The foregoing example is still used. The tunnel address of the source access network device may be carried in a response message of the second initial context setup request message for sending, and the second tunnel address of the first network element may be carried in a response message of the first initial context setup request message for sending.

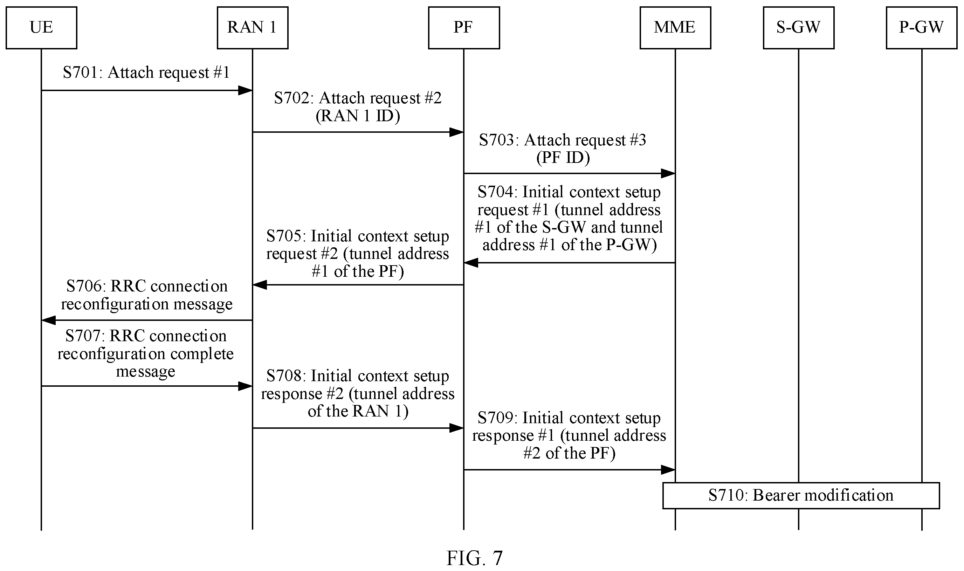

In this way, in the attach (attach) (or (re-)registration), tracking area update TAU, or SR procedure initiated by the terminal device in the coverage range of the source access network device, the first network element may allocate corresponding user plane tunnel information to the terminal device, to transmit data. For a specific implementation process, refer to related descriptions in the following method embodiment of FIG. 7. Details are not described herein. It should be understood that, if the source access network device of the terminal device is a target access network device to which the terminal device is handed over last time, for obtaining of a tunnel address of a user plane tunnel corresponding to the source access network device, reference may be made to the following manner of obtaining a tunnel address between the target access network device and the user plane network element. Details are not described herein.

In this embodiment of this application, a tunnel address of a device or a network element may include an IP address of the device or the network element and at least one tunnel endpoint identifier (tunnel endpoint identifier, TEID). Different TEIDs may form different user plane tunnels to transmit different service data. In addition, the tunnel address may also be referred to as tunnel information. Tunnel information of an access network device may also be referred to as downlink or access network tunnel information, and tunnel information of a core network element may also be referred to as uplink or core network tunnel information. Tunnel information of the first network element between an access network device and a core network user plane device may be referred to differently based on a sending direction of the tunnel information. Tunnel information sent to the access network device may be referred to as uplink first network element tunnel information, and tunnel information sent to the mobility management network element may be referred to as downlink first network element tunnel information. This is not limited.

For example, the tunnel address that is of the source access network device and that forms the third user plane tunnel includes IP-S and TEID-S1 to TEID-S3, and the second tunnel address includes IP-P and TEID-PS1 to TEID-PS3. IP-S+TEID-S1 and IP-P+TEID-PS1 form a third user plane tunnel used to carry uplink and downlink data corresponding to a service 1, IP-S+TEID-S2 and IP-P+TEID-PS2 from a third user plane tunnel used to carry uplink and downlink data corresponding to a service 2, and IP-S+TEID-S3 and IP-P+TEID-PS3 form a third user plane tunnel used to carry uplink and downlink data corresponding to a service 3. Similarly, the second tunnel address forming the first user plane tunnel includes IP-P and TEID-PU1 to TEID-PU3, and the tunnel address of the user plane network element includes IP-U and TEID-U1 to TEID-U3. IP-P+TEID-PU1 and IP-U+TEID-U1 form a first user plane tunnel used to carry uplink and downlink data corresponding to a service 1, IP-P+TEID-PU2 and IP-U+TEID-U2 form a first user plane tunnel used to carry uplink and downlink data corresponding to a service 2, and IP-P+TEID-PU3 and IP-U+TEID-U3 form a first user plane tunnel used to carry uplink and downlink data corresponding to a service 3. The three first user plane tunnels and the three third user plane tunnels are in one-to-one correspondence, and form three user plane tunnels used to transmit different services between the source access network device and the user plane network element. For example, IP-S+TEID-S1 and IP-P+TEID-PS1 correspond to IP-P+TEID-PU1 and IP-U+TEID-U1, IP-S+TEID-S2 and IP-P+TEID-PS2 correspond to IP-P+TEID-PU2 and IP-U+TEID-U2, and IP-S+TEID-S3 and IP-P+TEID-PS3 correspond to IP-P+TEID-PU3 and IP-U+TEID-U3.

It can be learned that when handover of the terminal device between access network devices occurs, the first user plane tunnel has been established for the user plane tunnel between the first network element and the user plane network element. If the target access network device of the terminal device is also located in the service area of the first network element, the first user plane tunnel still exists. In other words, regardless of which access network device in the service area of the first network element the terminal device is handed over to, the first user plane tunnel may remain unchanged.

In this embodiment of this application, the handover performed by the terminal device may mainly include handover in the following two scenarios:
Scenario 1: The source access network device of the terminal device initiates handover to the target access network device based on an X2 or Xn interface, so that after the terminal device is handed over to the target access network device, the target access network device initiates path switching, to switch a tunnel used to carry the user plane data of the terminal device from the user plane tunnel between the user plane network element and the source access network device to a user plane tunnel between the user plane network element and the target access network device. For a procedure of handover between access network devices based on the X2 or Xn interface, refer to an existing related implementation process. Details are not described herein.

In the scenario 1, the first network element may receive the first message from the target access network device of the terminal device, and the first message may be a path switch request (path switch request). In other words, after the terminal device is handed over to the target access network device based on the X2 or Xn interface, the target access network device sends the first message to the first network element, so that the first network element learns that the user plane tunnel needs to be switched because handover of the terminal device occurs. After path switching is completed, downlink data is transferred from a source access network device side to a target access network device side for transmission.

In this case, the first message may include an identifier of the target access network device, a cell identifier (mapped cell ID) mapped by the target access network, and a tunnel address of the target access network device.

The identifier of the target access network device may be a name, an address, or the like, for example, an evolved universal terrestrial radio access network (evolved universal terrestrial radio access network, E-UTRAN) cell global identifier (E-UTRAN cell global identifier, ECGI) of the target access network device, where the ECGI corresponds to an NR cell global identifier (NR cell global identifier, NCGI) in a 5G system.

The tunnel address of the target access network device may be used to establish a second user plane tunnel, and the second user plane tunnel is used to carry the user plane data of the terminal device between the target access network device and the first network element. In other words, the second user plane tunnel is a tunnel used to carry the user plane data of the terminal device between the target access network device and the first network element. Specifically, the tunnel identifier of the target access network device may include an IP address of the target access network device and at least one TEID. In a possible implementation, because the terminal device is handed over from the source access network device to the target access network device, and the corresponding user plane data also needs to be switched to the target access network device for transmission, the tunnel address of the target access network device may be configured by the target access network device based on the tunnel address of the source access network device. Still refer to the foregoing example. The tunnel address of the source access network device includes IP-S and TEID-S1 to TEID-S3, and the target access network device can support transmission of three types of service data. In this case, the tunnel address of the target access network device may be configured as IP-D and TEID-D1 to TEID-D3, to correspond to transmission of the three types of service data.

It should be understood that the first message may further include other information related to path switching. For specific included information and specific meanings of the information, refer to related descriptions of a path switch message in an existing 4G or 5G handover procedure. Details are not described herein.

Scenario 2: Because there is no X2 or Xn interface between access network devices, after determining the target access network device based on information such as a measurement report and cell load of the terminal device and by comprehensively considering a mobility restriction and a radio capability of the terminal device, the source access network device initiates handover based on an S1 or N2 interface, to trigger handover of the terminal device from the source access network device to the target access network device through the mobility management network element. In this process, the first network element is also triggered to perform user plane tunnel switching.

In the scenario 2, the first network element may receive the first message from the source access network device, and the first message may be a handover required (handover required) message. In other words, after determining to hand over the terminal device to the target access network device, the source access network device sends the first message to the first network element, to trigger the network to prepare for the handover.

In this case, the first message may include an identifier of the target access network device, a security context of the terminal device, a capability of the terminal device, a handover type, buffered data to be transmitted from a source cell to a target cell (SourceToTarget-TransparentContainer), packet data unit (packet data unit, PDU) session information, and the like. For specific information included in the first message and specific meanings of the information, refer to related descriptions of a handover required message in an existing 4G or 5G handover procedure. Details are not described herein.

S602: The first network element sends a first tunnel address of the first network element to the target access network device of the terminal device based on the first message.

The first tunnel address is used to establish the second user plane tunnel.

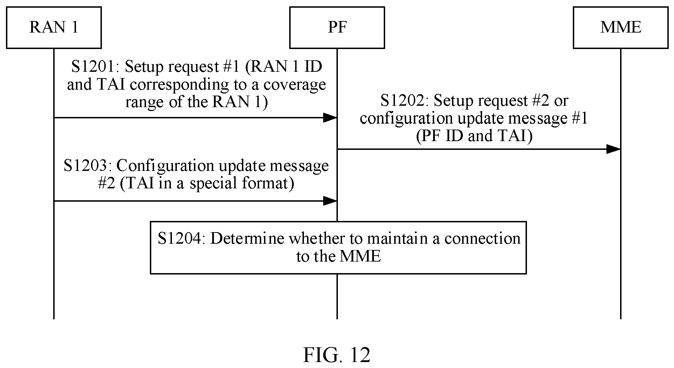

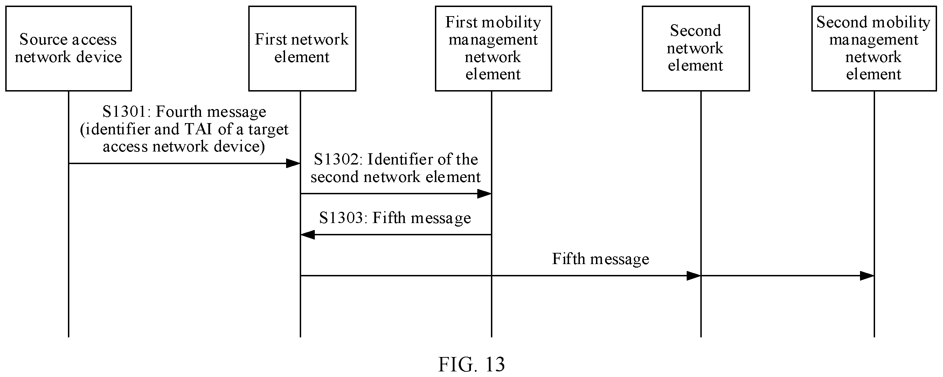

In this embodiment of this application, after receiving the first message, the first network element may first determine, based on the identifier of the target access network device, whether the target access network device is an access network device that the first network element manages or serves as a proxy for. If the target access network device is an access network device that the first network element manages or serves as a proxy for, the first network element determines that the handover corresponding to the first message is handover between access network devices within a service range of the first network element, so that the first network element may allocate, based on the first message, a tunnel address used to establish the second user plane tunnel, to implement switching of the user plane tunnel. It should be understood that, if the target access network device is not an access network device that the first network element manages or serves as a proxy for, the handover is handover across proxy service areas, that is, is implemented by a second network element that manages or serves as a proxy for the target access network device. For specific implementation, refer to related descriptions in the following method embodiments of FIG. 12 and FIG. 13. Details are not described herein.

In the scenario 1, the first network element configures the first tunnel address of the first network element based on the first message in the following two specific implementations:
In a possible implementation 1, the first network element determines the first tunnel address of the first network element based on the tunnel address of the target access network device in the first message.

In the implementation 1, because the terminal device has been handed over to the target access network device, the first network element can determine that the first user plane tunnel between the first network element and the user plane network element does not change due to the handover between the access network devices. The first network element may directly configure, based on the tunnel address of the target access network device in the first message, the first tunnel address that is of the first network element and that is used to establish the second user plane tunnel.

For example, if the tunnel address of the target access network device includes IP-D and TEID-D1 to TEID-D3, the first network element may configure the first tunnel address of the first network element as IP-P and TEID-PD1 to TEID-PD3, and configure a correspondence between the first tunnel address of the first network element and the third tunnel address corresponding to the third user plane tunnel that is stored in the first network element. For example, TEID-PD1 corresponds to TEID-PU1, TEID-PD2 corresponds to TEID-PU2, and TEID-PD3 corresponds to TEID-PU3. In this way, continuity of data transmission is ensured.

In a possible implementation 2, the first network element indicates, based on the first message, the mobility management network element not to change (or to maintain) the tunnel address of the user plane network element, to trigger configuration of the first tunnel address of the first network element based on a feedback from the mobility management network element.

In the implementation 2, the first network element may send first indication information to the mobility management network element based on the first message, to indicate the mobility management network element not to change (or to maintain) the tunnel address of the user plane network element. The first indication information may indicate that handover of the terminal device between access network devices occurs within the service range of the first network element.

Correspondingly, the mobility management network element receives the first indication information from the first network element, and sends second indication information to the first network element based on the first indication information. The second indication information may indicate that the tunnel address of the user plane network element remains unchanged.

Because the first network element may serve as a proxy for an access network device located in the service area of the first network element and communicate with the mobility management network element, the first network element may be mapped to a logical access network device or a virtual access device and communicate with the mobility management network element. For the mobility management network element, the first network element is considered as an access network device. Therefore, when handover of the terminal device between access network devices occurs within the service area of the first network element, the mobility management network element cannot determine, without receiving any indication, whether handover of the terminal device currently occurs, and therefore cannot determine whether the first user plane tunnel between the mobility management network element and the first network element needs to be modified.

Therefore, after determining, based on the received first message, that the handover of the terminal device is handover between access network devices within the service range of the first network element, the first network element may send the first indication information to the mobility management network element, so that the mobility management network element may not modify or maintain, based on the first indication information, the tunnel address (that is, the first tunnel address of the user plane network element) that is of the user plane network element and that corresponds the first user plane tunnel.

Alternatively, the first indication information may indicate that handover of the terminal device within the access network device occurs.

In a possible design, the first indication information may be carried in a path switch request for sending. In other words, the first network element sends the path switch request to the mobility management network element, where the path switch request carries an identifier of the first network element and the first indication information.

Because the first network element serves as a proxy for an access network device in the service area of the first network element to communicate with the mobility management network element, and the first network element serves as a logical access network device or a virtual access network device, the identifier of the first network element may be used to identify any access network device in the service area of the first network element, in other words, the identifier of the first network element is used to identify the first network element as a logical access network device or a virtual access device. A format used by the identifier of the first network element may be consistent with a format of an identifier of an access network device. For example, the identifier of the first network element is represented as an ID of a logical access network device or a virtual access network device.

In this design, the second path switch request sent by the first network element to the mobility management network element may be obtained by the first network element by modifying the first path switch message received from the target access network device, for example, replacing the identifier of the target access network device in the first path switch message from the target access network device with the identifier of the first network element, and replacing the tunnel address of the target access network device with the second tunnel address of the first network element. This is not limited herein.

In a possible implementation, the first indication information includes at least one of the following: the identifier of the first network element, the second tunnel address of the first network element, or a radio access technology type (radio access technology type, RAT type) of a satellite, a RAT type of a regenerative satellite, or newly added indication information indicating that handover between regenerative satellites occurs. In other words, the first indication information may be newly defined or newly added indication information, or may indicate, by reusing one or more of the foregoing parameters that are not changed, that the mobility management network element does not need to modify the tunnel address of the user plane network element.

Correspondingly, after receiving the first indication information, the mobility management network element may determine, based on the first indication information, that the tunnel address of the user plane network element does not need to be modified, and send the second indication information to the first network element, to notify, by using the second indication information, the first network element that the mobility management network element knows that handover of the terminal device occurs and that the mobility management network element does not modify the tunnel address of the user plane network element.

Similar to the first indication information, the second indication information may be newly defined or newly added indication information, or may provide an indication by reusing some parameters that are not changed. For example, the second indication information provides an indication by using the unmodified tunnel address of the user plane network element (that is, the first tunnel address that is of the user plane network element and that corresponds to the first user plane tunnel). In the foregoing design, the second indication information may be carried in a response message (path switch ack) of the second path switch request and sent to the first network element.

In this way, after obtaining the first indication information, the first network element may configure the first tunnel address of the first network element based on triggering of the first indication information and by using the tunnel address of the target access network device and/or the third tunnel address of the first network element, include the first tunnel address of the first network element in a response message corresponding to the first path switch request (that is, the first request), and send the response message to the target access network device.

For the scenario 1, in a possible design, the first network element may reuse the third tunnel address of the first network element, in other words, the first network element may use the third tunnel address of the first network element as the first tunnel address of the first network element for configuration, and send the third tunnel address of the first network element to the target access network device, to reduce a waste of tunnel resources. In other words, the first tunnel address that is of the first network element and that is used to establish the second user plane tunnel is the same as the third tunnel address that is of the first network element and that is used to establish the third user plane tunnel. For example, TEID-PD1 to TEID-PD3 are TEID-PS1 to TEID-PS3.

In the scenario 2, after receiving the first message, the first network element may send first indication information to the mobility management network element based on the first message. Correspondingly, the mobility management network element receives the first indication information from the first network element, and sends a second tunnel address of the user plane network element to the first network element based on the first indication information. For specific descriptions of the first indication information, refer to related descriptions in the implementation 2 in the scenario 1. Details are not described herein. The second tunnel address of the user plane network element is determined based on the first tunnel address of the user plane network element. In this way, the first network element may configure the first tunnel address of the first network element based on the second tunnel address of the user plane network element that is received from the mobility management network element.

After learning, based on the first indication information, that handover of the terminal device occurs, the mobility management network element determines, based on obtained handover-related information of the terminal device, whether there is a service that does not support handover in a service for which transmission has been currently established. If there is a service that does not support handover, the mobility management network element cancels a user plane tunnel established for the service that does not support handover, filters out or deletes a TEID corresponding to the service that does not support handover from the first tunnel address of the user plane network element, and reserves a TEID corresponding to a service that supports handover, to use the reserved TEID corresponding to the service that supports handover as the second tunnel address of the user plane network element, and feed back the second tunnel address of the user plane network element to the first network element. If there is no service that does not support handover, the mobility management network element determines the first tunnel address that is of the user plane network element and that corresponds to the established first user plane tunnel as the second tunnel address of the user plane network element, to feed back the second tunnel address of the user plane network element to the first network element.

Still refer to the foregoing example. In a specific example 1, the first tunnel address that is of the user plane network element and that corresponds to the established first user plane tunnel includes IP-U and TEID-U1 to TEID-U3, and a service corresponding to TEID-U1 does not support handover. In this case, the second tunnel address of the user plane network element includes IP-U, TEID-U2, and TEID-U3. In a specific example 2, all services corresponding to the established first user plane tunnel support handover, so that the second tunnel address of the user plane network element includes IP-U, and TEID-U1 to TEID-U3.

Therefore, the first network element may configure the first tunnel address of the first network element based on the second tunnel address of the user plane network element that is received from the mobility management network element.

Refer to the specific example 1. The second tunnel address of the user plane network element includes IP-U, TEID-U2, and TEID-U3. In this case, the first network element may configure the first tunnel address of the first network element to include IP-P, TEID-PD2, and TEID-PD3. Refer to the specific example 2. The second tunnel address of the user plane network element includes IP-U and TEID-U1 to TEID-U3. In this case, the first tunnel address of the first network element may be configured as IP-P and TEID-PD1 to TEID-PD3.

In a possible implementation, similar to the scenario 1, in the scenario 2, the first network element may also reuse the third tunnel address of the first network element to configure the first tunnel address of the first network element. For example, TEID-PD1 is TEID-PS1, TEID-PD2 is TEID-PS2, and TEID-PD3 is TEID-PS3.

In a possible design, the first indication information may be carried in a second handover required for sending. The second handover required may be obtained by the first network element by modifying the first handover required received from the source access network device. For example, the first network element replaces the identifier of the target access network device in the first handover required with the identifier of the first network element, or includes the first indication information in the first handover required. This is not limited herein.

In this design, after sending the second handover required to the mobility management network element, the first network element may receive a first handover request (handover request) from the mobility management network element. The first handover request carries the second tunnel address of the user plane network element. For example, the second tunnel address of the user plane network element is carried in an evolved packet system (evolved packet system, EPS) bearers to setup (EPS Bearers to Setup) information element in the first handover request. Therefore, the first network element may send a second handover request to the target access network device based on the first handover request. The second handover request carries the first tunnel address of the first network element. For example, the first tunnel address of the first network element is carried in an EPS bearers to setup (EPS Bearers to Setup) information element of the second handover request. In this way, when handover between access network devices is triggered, the user plane tunnel is also switched.

It should be understood that the second handover request may be obtained by the first network element by modifying the first handover request. For example, the first network element replaces the identifier of the first network element in the first handover request with the identifier of the target access network device, and replaces the second tunnel address of the user plane network element with the first tunnel address of the first network element. This is not limited herein.

After the first network element sends the first tunnel address of the first network element to the target access network device, the target access network device sends the tunnel address of the target access network device to the first network element, and the first network element receives the tunnel address of the target access network device from the target access network device. The tunnel address of the target access network device may be determined based on the first tunnel address of the first network element. Specifically, after receiving the first tunnel address of the first network element, the target access network device may configure the corresponding tunnel address of the target access network device for the first network element based on the first tunnel address of the first network element, and send the tunnel address of the target access network device to the first network element, to establish the second user plane tunnel.

After receiving the first tunnel address of the first network element, the target access network device may determine a current resource usage status, air interface status, and the like, and determine whether bearer establishment can be supported for all services corresponding to the first tunnel address of the first network element. If bearer establishment can be supported for all the services, the target access network device configures a corresponding tunnel address based on the received first tunnel address of the first network element. If bearer establishment cannot be supported for all the services, the target access network device may select a part of services for bearer establishment, and configure a corresponding tunnel address based on a tunnel address corresponding to the part of selected services.

Still refer to the specific example 1. The first tunnel address of the first network element includes IP-P, TEID-PD2 (corresponding to a service 2), and TEID-PD3 (corresponding to a service 3). If the target access network device can support only bearer establishment of the service 2, the target access network device configures the tunnel address of the target access network device for a tunnel address (that is, IP-P+TEID-PD2) corresponding to the service 2. For example, the tunnel address of the target access network device includes IP-D+TEID-D2. If the target access network device can support bearer establishment of all services, that is, the service 2 and the service 3, the target access network device configures the tunnel address of the target access network device for tunnel addresses (that is, IP-P+TEID-PD2 and IP-P+TEID-PD3) respectively corresponding to the service 2 and the service 3. For example, the tunnel address of the target access network device includes IP-D, TEID-D2, and TEID-D3.

Still refer to the specific example 2. The first tunnel address of the first network element may be configured as IP-P, and TEID-PD1 to TEID-PD3. If the target access network device can support only bearer establishment of a service 2 and a service 3, the target access network device configures the tunnel address of the target access network device for tunnel addresses (that is, IP-P+TEID-PD2 and IP-P+TEID-PD3) respectively corresponding to the service 2 and the service 3. For example, the tunnel address of the target access network device includes IP-D, TEID-D2, and TEID-D3. If the target access network device can support bearer establishment of all services, that is, a service 1 to a service 3, the target access network device configures the tunnel address of the target access network device for tunnel addresses (that is, IP-P+TEID-PD1, IP-P+TEID-PD2, and IP-P+TEID-PD3) respectively corresponding to the service 1 to the service 3. For example, the tunnel address of the target access network device includes IP-D and TEID-D1 to TEID-D3.

Based on the foregoing design, the tunnel address of the target access network device may be carried in a response message (handover request ack) of the second handover request for sending. For example, the tunnel address of the target access network device is carried in an EPS bearers setup list (EPS Bearers Setup List) information element in the response message of the second handover request.

Further, after obtaining the tunnel address of the target access network device, the first network element may determine a fourth tunnel address of the first network element based on the tunnel address of the target access network device, and send the fourth tunnel address of the first network element to the mobility management network element. The fourth tunnel address of the first network element is used to establish a fourth user plane tunnel, and the fourth user plane tunnel is used to carry the user plane data of the terminal device between the first network element and the user plane network element.

Refer to the foregoing example. If the tunnel address of the target access network device includes IP-D, TEID-D2, and TEID-D3, the fourth tunnel address of the first network element includes IP-P, TEID-PU2, and TEID-PU3. If the tunnel address of the target access network device includes IP-D and TEID-D1 to TEID-D3, the fourth tunnel address of the first network element includes IP-P and TEID-PU1 to TEID-PU3.

Based on the foregoing design, the fourth tunnel address of the first network element may be carried in a response message of the first handover request for sending. For example, the fourth tunnel address of the first network element is carried in an EPS bearers setup list (EPS Bearers Setup List) information element in the response message of the first handover request.

It can be learned from the foregoing descriptions that, in the scenario 2, when handover between access network devices occurs, the mobility management network element performs filtering on at least one established first user plane tunnel based on whether a service supports handover; reserves a first user plane tunnel corresponding to a service that supports handover, that is, reserves a tunnel address corresponding to the service that supports handover in the first tunnel address that is of the user plane network element and that corresponds to the first user plane tunnel; and sends the tunnel address to the first network element. Then, the first network element converts the tunnel address into the first tunnel address of the first network element, and sends the first tunnel address to the target access network device. The target access network device performs filtering based on a bearer establishment capability of the target access network device; reserves a tunnel address, in the first tunnel address of the first network element, that is of the first network element and that corresponds to a service for which a bearer can be established; and configures a corresponding tunnel address and sends the tunnel address to the first network element. In this way, the tunnel address of the target access network device and the tunnel address of the first network element that are used to establish the second user plane tunnel can be obtained.

Further, the first network element may configure, based on the obtained tunnel address of the target access network device, the fourth tunnel address that is of the first network element and that is used to establish the fourth user plane tunnel. In this case, it is equivalent to performing filtering on the second tunnel address that is of the first network element and that corresponds to the first user plane tunnel, so that the mobility management network element may select, from the second tunnel address of the user plane network element based on the fourth tunnel address of the first network element, a tunnel address that is of the user plane network element and that is used to establish the fourth user plane tunnel. In this way, it is equivalent to performing secondary filtering on the at least one established first user plane tunnel.

Still refer to the foregoing example. If the fourth tunnel address of the first network element includes IP-P, TEID-PU2, and TEID-PU3, a third tunnel address that is of the user plane network element and that is used to establish the fourth user plane tunnel includes IP-U, TEID-U2, and TEID-U3. In this case, a quantity of established first user plane tunnels is reduced from 3 to 2, there are two corresponding second user plane tunnels between the first network element and the target access network device, and a quantity of transmitted services decreases.

If the fourth tunnel address of the first network element include IP-P and TEID-PU1 to TEID-PU3, a third tunnel address that is of the user plane network element and that is used to establish the fourth user plane tunnel includes IP-U and TEID-U1 to TEID-U3. In this case, three established first user plane tunnels are not changed, and there are three corresponding second user plane tunnels between the first network element and the target access network device.

In a possible implementation, the first network element sends the fourth tunnel address of the first network element to the mobility management network element; and the first network element may further receive third indication information from the mobility management network element, and release a resource of the third user plane tunnel based on the third indication information. The third indication information indicates to release the resource of the third user plane tunnel. In other words, after user plane tunnel establishment between the target access network device and the user plane network element is completed, the first network element may release, based on triggering of the third indication information sent by the mobility management network element, a resource of an established user plane tunnel related to the source access network device, for example, the tunnel address of the source access network device and the third tunnel address of the first network element.

In the foregoing design, the third indication information may be carried in a handover command (handover command) for sending. For example, the third indication information is indicated by using a bearers to release (Bearers to Release) information element in the first handover command, and the handover command is used to trigger handover of the terminal device between access network devices. Further, the handover command may be sent by the first network element to the terminal device through the source access network device, so that the terminal device completes handover from the source access network device to the target access network device.

Based on the communication method shown in FIG. 6, the first network element serves as a proxy for an access network device and communicates with a core network. When the first user plane tunnel that is established between the first network element and the user plane network element and that is used to carry the user plane data of the terminal device exists, the first network element may determine, based on the first message used for handover of the terminal device, the second user plane tunnel that is between the terminal device and the target access network device and that is used to carry the user plane data of the terminal device, to switch a user plane tunnel on an access network device side, without a need to switch the tunnel between the first network element and the user plane network element, so that user plane connection management can be implemented, and signaling overheads can be reduced.

The following describes in detail the communication method shown in FIG. 6 with reference to a 4G network architecture. An example in which the terminal device is UE, the source access network device is a RAN 1, the target access network device is a RAN 2, the first network element is a PF, the mobility management network element is an MME, and the user plane network element is an S-GW is used. FIG. 7 is a schematic flowchart of a communication method according to an embodiment of this application. FIG. 7 describes a process of establishing, in an attach, TAU update, or SR procedure initiated by the terminal device in a coverage range of the RAN 1, a user plane tunnel used to carry the user plane data of the terminal device. The communication method includes the following steps.

S701: The UE sends an attach request (attach request) #1 to the RAN 1.

Correspondingly, the RAN 1 receives the attach request #1 from the UE.

After being powered on, the UE is in the coverage range of the RAN 1, and may first establish an RRC connection to the RAN 1 by using a random access (RACH access) procedure, and then send the attach request #1 to the RAN 1, to create a data transmission connection. The attach request #1 is a NAS message of the UE, and may be carried in an RRC connection setup complete (RRC connection setup complete) message for sending.

In a scenario in which the UE initiates a TAU, for example, the UE detects that the UE has entered a new TA that is not in a TAI list registered by the UE with a network, the attach request #1 in S701 may be replaced with a TAU request (TAU request) #1.

In a scenario in which the UE initiates an SR, for example, a user plane radio bearer used for the UE needs to be established, the attach request #1 in S701 may be replaced with an SR request (SR request) #1.

S702: The RAN 1 sends an attach request #2 to the PF.

Correspondingly, the PF receives the attach request #2 from the RAN 1.

The attach request #2 includes a TAI corresponding to a coverage area of the RAN 1 (a TAI corresponding to a coverage area in which the UE is located), a RAN 1 ID, and a mapped cell ID.

In the scenario in which the UE initiates the TAU, the attach request #2 in S702 may be replaced with a TAU request #2, and the TAU request #2 carries the foregoing information related to the RAN 1. In the scenario in which the UE initiates the SR, the attach request #2 may be replaced with an SR request #2, and the SR request #2 carries the foregoing information related to the RAN 1.

S703: The PF sends an attach request #3 to the MME.

Correspondingly, the MME receives the attach request #3 from the PF.

After receiving the attach request #2, the PF replaces the RAN 1 ID in the attach request #2 with an ID of the PF, that is, a PF ID. The PF ID is used to identify the PF as an access network device. After the replacement, the PF obtains the attach request #3, and sends the attach request #3 to the MME associated with the PF. One PF corresponds to one MME.

In the scenario in which the UE initiates the TAU, the PF performs a similar replacement action as above, to obtain a TAU request #3. In the scenario in which the UE initiates the SR, the PF also performs a similar replacement action as above, to obtain an SR request #3.

S704: The MME sends an initial context setup request (initial context setup request) #1 to the PF.

Correspondingly, the PF receives the initial context setup request #1 from the MME.

After receiving the attach request #3, the MME may send a create session request (create session request) to the S-GW to establish a user data transmission path. Then, the S-GW sends a create session request to a P-GW, so that the P-GW allocates an IP address to the UE. Correspondingly, the P-GW sends a create session response (create session response) to the S-GW, and the MME receives a create session response (create session response) from the S-GW. In this way, the MME may obtain a tunnel address #1 of the S-GW (including an IP address of the S-GW and TEIDs) and a tunnel address #1 of the P-GW (including an IP address of the P-GW and TEIDs). The tunnel address #1 of the S-GW is used to establish a user plane tunnel #1 that is between the PF and the S-GW and that is used to carry user plane data of the UE, and the tunnel address #1 of the P-GW is used to establish a tunnel between the S-GW and the P-GW. Therefore, the MME sends the initial context setup request #1 to the PF. The initial context setup request #1 includes an attach accept (attach accept) message, the tunnel address #1 of the S-GW, and the tunnel address #1 of the P-GW.

In the scenario in which the UE initiates the TAU, after the MME receives the TAU request #3, similar to the case in which the MME receives the attach request #3, the MME creates sessions with the S-GW and the P-GW based on create session requests. After the sessions are created, the MME sends an S1 message #1 to the PF, that is, the initial context setup request #1 is replaced with the S1 message #1. The S1 message #1 includes a TAU accept (TAU accept) message, the tunnel address #1 of the S-GW, and the tunnel address #1 of the P-GW.

In the scenario in which the UE initiates the SR, different from the attach or TAU scenario, after receiving the SR request #3, the MME directly sends an initial context setup request #1 to the PF. The initial context setup request #1 includes the tunnel address #1 of the S-GW and the tunnel address #1 of the P-GW.

The tunnel address #1 of the S-GW may correspond to the first tunnel address of the user plane network element in S601, and the user plane tunnel #1 may correspond to the first user plane tunnel in S601.

S705: The PF sends an initial context setup request #2 to the RAN 1.

Correspondingly, the RAN 1 receives the initial context setup request #2 from the PF.

After receiving the initial context setup request #1, the PF configures a tunnel address #1 of the PF based on the tunnel address #1 of the S-GW in the initial context setup request #1, where the tunnel address #1 of the PF is used to establish a user plane tunnel #2 that is between the PF and the RAN 1 and that is used to carry the user plane data of the UE, to replace the tunnel address #1 of the S-GW and the tunnel address #1 of the P-GW in the initial context setup request #1 with the tunnel address #1 of the PF, and obtain the initial context setup request #2.

In the scenario in which the UE initiates the TAU, after receiving the S1 message #1, the PF performs tunnel address configuration and replacement operations as described in the foregoing attach procedure, to obtain an S1 message #2. The S1 message #2 includes the tunnel address #1 of the PF.

In the scenario in which the UE initiates the SR, after receiving the initial context setup request #1, the PF performs tunnel address configuration and replacement operations as described in the foregoing attach procedure, to obtain an initial context setup request #2. The initial context setup request #2 includes the tunnel address #1 of the PF.

The tunnel address #1 of the PF may correspond to the third tunnel address of the first network element in S601.

S706: The RAN 1 sends an RRC connection reconfiguration (RRC connection reconfiguration) message to the UE.

Correspondingly, the UE receives the RRC connection reconfiguration message from the RAN 1.

The RRC connection reconfiguration message includes an EPS radio bearer identity (EPS radio bearer identity). In addition, the RAN 1 also sends an attach accept message to the UE. After receiving the initial context setup request #2, the RAN 1 sends the RRC connection reconfiguration message to the UE for radio bearer establishment.

In the scenario in which the UE initiates the TAU, the RRC connection reconfiguration message is replaced with a TAU accept message, that is, the RAN 1 forwards the TAU accept message to the UE.

In the scenario in which the UE initiates the SR, after receiving the initial context setup request #2, the RAN 1 also performs radio bearer establishment with the UE. Similar to the foregoing attach procedure, the RAN 1 sends an RRC connection reconfiguration message to the UE to establish a radio bearer with the UE.

S707: The UE sends an RRC connection reconfiguration complete (RRC connection reconfiguration complete) message to the RAN 1.

Correspondingly, the RAN 1 receives the RRC connection reconfiguration complete message from the UE.

After completing radio bearer establishment based on the RRC connection reconfiguration message, the UE 1 sends the RRC connection reconfiguration complete message to the RAN 1, to indicate that radio bearer establishment is completed.

In the scenario in which the UE initiates the TAU, the UE sends a TAU complete (TAU complete) message to the RAN 1, that is, the RRC connection reconfiguration complete message is replaced with the TAU complete message.

In the scenario in which the UE initiates the SR, the UE performs an operation similar to that in the attach scenario, and sends an RRC connection reconfiguration complete message to the RAN 1, to indicate that radio bearer establishment is completed.

S708: The RAN 1 sends an initial context setup response (initial context setup response) #2 to the PF.

Correspondingly, the PF receives the initial context setup response #2 from the RAN 1.

The initial context setup response #2 is a response message of the initial context setup request #2 in S705, and the initial context setup response #2 includes a tunnel address of the RAN 1 (including an IP address of the RAN 1 and TEIDs).

In the scenario in which the UE initiates the TAU, after receiving the TAU complete message, the RAN 1 sends an S1 message #2 to the PF. The S1 message #2 includes the TAU complete message and the tunnel address of the RAN 1, that is, the initial context setup response #2 is replaced with the S1 message #2.

In the scenario in which the UE initiates the SR, the RAN 1 also sends an initial context setup response #2. The initial context setup response #2 includes the tunnel address of the RAN 1 (including the IP address of the RAN 1 and the TEIDs).

S709: The PF sends an initial context setup response (initial context setup response) #1 to the MME.

Correspondingly, the MME receives the initial context setup response #1 from the PF.

The initial context setup response #1 is a response message of the initial context setup request #1 in S704, the initial context setup response #1 includes a tunnel address #2 of the PF, and the tunnel address #2 of the PF is used to establish the user plane tunnel #1.

The PF configures the tunnel address #2 of the PF based on the tunnel address of the RAN 1 in the initial context setup response #2, to replace the tunnel address of the RAN 1 in the initial context setup response #2 with the tunnel address #2 of the PF, and obtain the initial context setup response #1.

In the scenario in which the UE initiates the TAU, after receiving the S1 message #2, the PF performs tunnel address configuration and replacement operations as described in the foregoing attach procedure, to obtain an S1 message #3. The S1 message #3 includes a TAU complete message and the tunnel address #2 of the PF.

In the scenario in which the UE initiates the SR, after receiving the initial context setup response #2, the PF performs tunnel address configuration and replacement operations as described in the foregoing attach procedure, to obtain an initial context setup response #1. The initial context setup response #1 includes the tunnel address #2 of the PF.

S710: The MME, the S-GW, and the P-GW perform bearer modification (modify bearer).

In the scenario in which the UE initiates the attach or the SR, after receiving the initial context setup response #1, the MME may further interact with the S-GW and the P-GW to perform bearer modification by sending a modify bearer request (modify bearer request).

Based on the foregoing process, the tunnel address #1 of the S-GW in S704 and the tunnel address #2 of the PF may be used to establish the user plane tunnel 1, and the tunnel address #1 of the PF and the tunnel address of the RAN 1 may be used to establish the user plane tunnel #2, to form a user plane tunnel between the RAN 1 and the S-GW, so that the user plane data of the UE can be transmitted by using the user plane tunnel #1 and the user plane tunnel #2.

The foregoing mainly describes related actions in the attach procedure, TAU update procedure, or SR procedure in this solution. For descriptions of specific messages exchanged in the attach procedure, refer to related descriptions of the attach procedure in section 5.3.2 in 3GPP technical specification (technical specification, TS) 23.401. For descriptions of specific messages exchanged in the TAU update procedure, refer to related descriptions of the TAU update procedure in section 5.3.3 in 3GPP TS 23.401. For descriptions of specific messages exchanged in the SR update procedure, refer to related descriptions of the SR procedure in section 5.3.4 in 3GPP TS 23.401. Details are not described herein.

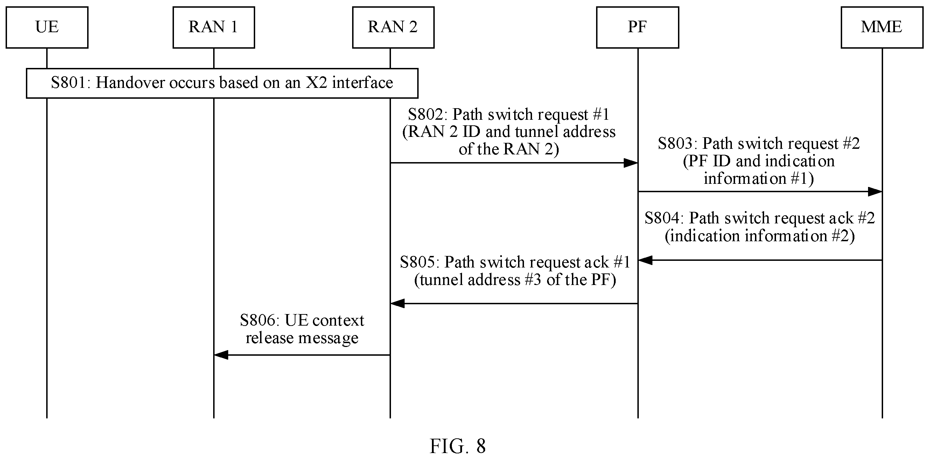

For example, FIG. 8 is a schematic flowchart of another communication method according to an embodiment of this application. A process of switching a user plane tunnel when the UE is handed over from the RAN 1 to the RAN 2 in an X2-based handover scenario is described by using an example in which the user plane tunnel (including the user plane tunnel #1 and the user plane tunnel #2) between the RAN 1 and the S-GW 1 is configured and established according to the procedure shown in FIG. 7. As shown in FIG. 8, the communication method includes the following steps.

S801: Handover of the UE between the RAN 1 and the RAN 2 occurs based on an X2 interface.

The UE is in a coverage range of the RAN 1, and the UE needs to be handed over between RANs due to movement of the UE or movement of the RAN 1. In this case, when the RAN 1 receives a measurement report of the UE and determines, based on the measurement report, that the UE is to be handed over to the RAN 2, the RAN 1 may directly apply for a resource from the RAN 2 through the X2 interface to complete resource preparation of a target cell, and then indicate, by using a reconfiguration message over an air interface, the UE to be handed over to the target cell. After the handover succeeds, the RAN 2 indicates the RAN 1 to release a radio resource of a source cell. In other words, in this case, the UE is handed over to the RAN 2, and uplink data of the UE is also switched to the RAN 2 for transmission.

S802: The RAN 2 sends a path switch request (path switch request) #1 to the PF.

Correspondingly, the PF receives the path switch request #1 from the RAN 2.

The path switch request #1 corresponds to the first message in S601. The path switch request #1 is used to notify the PF that cell handover occurs on the UE and a user plane radio bearer needs to be switched. The path switch request #1 includes a RAN 2 ID, a mapped cell ID (mapped cell ID) of the RAN 2, and a tunnel address of the RAN 2. The RAN 2 ID may be an ECGI of the RAN 2, the tunnel address of the RAN 2 includes an IP address of the RAN 2 and TEID-D1 to TEID-DX (X is an integer greater than 1), the tunnel address of the RAN 2 may be determined by the RAN 2 based on a tunnel address of the RAN 1 (including an IP address of the RAN 1 and TEID-S1 to TEID-SX), and the tunnel address of the RAN 2 may be carried in a list of to-be-switched EPS bearers (list of EPS bearers).

For a specific implementation process of S802, refer to related descriptions of the scenario 1 in S601. Details are not described herein.

S803: The PF sends a path switch request #2 to the MME.

Correspondingly, the MME receives the path switch request #2 from the PF.

The path switch request #2 corresponds to the second path switch request in S602, and the path switch request #2 includes a PF ID and indication information #1. The indication information #1 indicates that handover of the UE between access network devices occurs within a service range of the PF, to notify the MME that tunnel addresses of the S-GW and a P-GW do not need to be modified.

In a possible design, because the current handover of the UE does not trigger a change of the tunnel addresses of the S-GW and the P-GW, the indication information #1 may provide an indication by using a tunnel address #2 of the PF and/or the PF ID, to reduce overheads. The tunnel address #2 of the PF is a tunnel address that is of the PF and that corresponds to the user plane tunnel #1, and the user plane tunnel #1 is a user plane tunnel that has been established between the PF and the S-GW before the handover of the UE and that is used to carry user plane data of the UE. For example, a tunnel address #1 that is of the S-GW and that corresponds to the user plane tunnel #1 includes an IP address of the S-GW and TEID-U1 to TEID-UX, and the tunnel address #2 that is of the PF and that corresponds to the user plane tunnel #1 includes an IP address of the PF and TEID-PU1 to TEID-PUX. It should be understood that TEID-Di and TEID-PUi, and TEID-Si and TEID-PUi correspond to transmission of a same service, i is a positive integer, 1≤i≤X, and the PF and the MME store the tunnel address #1 of the S-GW and the tunnel address #2 of the PF that correspond to the user plane tunnel #1.

After receiving the path switch request #1, the PF may determine, based on the RAN 2 ID, that current RAN handover of the UE occurs within a service area of the PF, replace the RAN 2 ID in the path switch request #1 with the PF ID, and replace the tunnel address of the RAN 2 with the tunnel address #2 of the PF, to obtain the path switch request #2.

Therefore, after receiving the path switch request #2, the MME may determine that the current handover of the UE does not require changing the tunnel addresses of the S-GW and the P-GW, that is, the tunnel address #1 of the S-GW and a tunnel address #1 of the P-GW that correspond to the user plane tunnel #1 remain unchanged, and then perform the following S803.

The indication information #1 corresponds to the first indication information in S602, the tunnel address #2 of the PF corresponds to the second tunnel address of the first network element in S602, and the tunnel address #1 of the S-GW corresponds to the first tunnel address of the user plane network element in S601. For a specific implementation process of S803, refer to related descriptions of the scenario 1 in S602. Details are not described herein.

S804: The MME sends a path switch request acknowledge (path switch request ack) #2 to the PF.

Correspondingly, the PF receives the path switch request acknowledge #2 from the MME.

The path switch request acknowledge #2 is a response message of the path switch request #2 in S803, the path switch request acknowledge #2 may include indication information #2, and the indication information #2 indicates that the tunnel addresses of the S-GW and the P-GW are not changed. In a possible design, the indication information #1 may provide an indication by using the tunnel address #1 of the S-GW and the tunnel address #1 of the P-GW, to reduce overheads.

The indication information #2 in S804 corresponds to the second indication information in S602. For specific descriptions, refer to related descriptions of the second indication information. Details are not described herein.

S805: The PF sends a path switch request acknowledge #1 to the RAN 2.

Correspondingly, the RAN 2 receives the path switch request acknowledge #1 from the PF.

The path switch request acknowledge #1 is a response message of the path switch request #1 in S802, the path switch request acknowledge #1 includes a tunnel address #3 of the PF, the tunnel address #3 of the PF is used to establish a user plane tunnel #3, and the user plane tunnel #3 is a tunnel that is between the PF and the RAN 2 and that is used to carry the user plane data of the UE.

After receiving the path switch request acknowledge #2, the PF may configure the tunnel address #3 of the PF based on a tunnel address #1 that is of the PF and that corresponds to the user plane tunnel #1 and/or the tunnel address of the RAN 2, to include the tunnel address #3 of the PF in the path switch request acknowledge #1 for sending. For example, the configured tunnel address #3 of the PF includes the IP address of the PF and TEID-PD1 to TEID-PDX. It should be understood that TEID-PDi and TEID-Di, TEID-Di and TEID-PUi, and TEID-Si and TEID-PUi correspond to transmission of a same service.

Optionally, the tunnel address #3 of the PF is the tunnel address #1 of the PF, that is, the PF may reuse the tunnel address that is of the PF and that corresponds to the user plane tunnel #2 established between the RAN 1 and the PF, to reduce tunnel resources.

The tunnel address #3 of the PF corresponds to the first tunnel address of the first network element in S602. For a specific implementation process of S805, refer to related descriptions of the scenario 1 in S602. Details are not described herein.

In a possible design solution, the PF may determine, based on the path switch request #1, that the current handover of the UE does not require changing the tunnel addresses of the S-GW and the P-GW, and directly send the path switch request acknowledge #1 to the RAN 2 based on the path switch request #1. In this case, S803 and S804 are optional steps.

In this way, the PF and the S-GW maintain the user plane tunnel #1 that has been established between the PF and the S-GW, and the configured tunnel address #3 of the PF and the tunnel address of the RAN 2 form the user plane tunnel #3 used to carry the user plane data of the UE, so that switching of the user plane tunnel is implemented.

S806: The RAN 2 sends a UE context release (UE context release) message to the RAN 1. Correspondingly, the RAN 1 receives the UE context release message from the RAN 2.

After receiving the path switch request acknowledge #1, the RAN 2 may learn that the current user plane tunnel is switched from the RAN 1 to the RAN 2. In this case, the RAN 2 may send the UE context release message to the RAN 1, to indicate, to the RAN 1, that switching of the user plane tunnel has currently been completed and a context of the UE can be released.

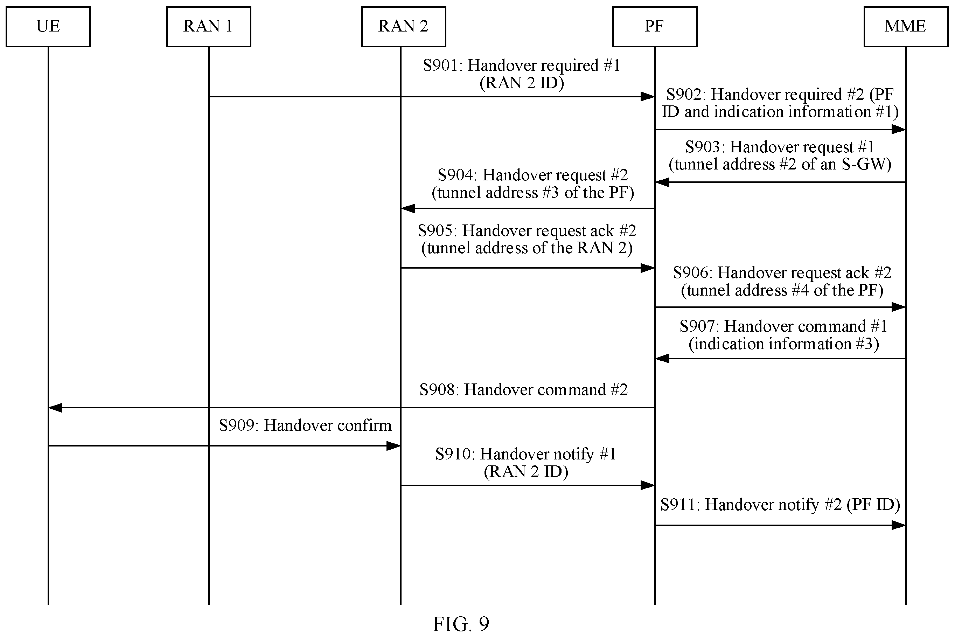

For example, FIG. 9 is a schematic flowchart of another communication method according to an embodiment of this application. A process of switching a user plane tunnel for the UE in an S1-based handover scenario is also described by using the example in which the user plane tunnel (including the user plane tunnel #1 and the user plane tunnel #2) between the RAN 1 and the S-GW 1 is configured and established according to the procedure shown in FIG. 7. As shown in FIG. 9, the communication method includes the following steps.

S901: The RAN 1 sends a handover required (handover required) #1 to the PF.

Correspondingly, the PF receives the handover required #1 from the RAN 1.

The handover required #1 is used to indicate a network to initiate handover preparation and request resource preparation or reservation, and the handover required #1 includes an ID of a target RAN of the UE, for example, a RAN 2 ID. The handover required #1 corresponds to the first message in S601.

S902: The PF sends a handover required #2 to the MME.

Correspondingly, the MME receives the handover required #2 from the PF.

After receiving the handover required #1, the PF may determine, based on the RAN 2 ID, that current RAN handover of the UE occurs within a service area of the PF, and therefore replace the RAN 2 ID in the handover required message #1 with a PF ID, to obtain the handover required #2.

In a possible design, because the MME uses the PF as a RAN for communication, to prevent the MME from finding, after receiving the handover required #2, that a target RAN ID for handover of the UE is the PF ID and considering that the message is incorrect because no change occurs, the handover required #2 may include indication information #1. The indication information #1 indicates that handover of the UE between RANs occurs within a service range of the PF.

Optionally, the indication information #1 may provide an indication by using a tunnel address #2 of the PF, the tunnel address #2 of the PF is a tunnel address that is of the PF and that corresponds to the user plane tunnel #1, and the user plane tunnel #1 is a user plane tunnel that has been established between the PF and the S-GW before the handover of the UE and that is used to carry user plane data of the UE.

S903: The MME sends a handover request (handover request) #1 to the PF.

Correspondingly, the PF receives the handover request #1 from the MME.

After receiving the handover required #2, the MME learns that handover of the UE between RANs occurs. In this case, the MME may determine, based on a tunnel address #1 that is of the S-GW and that corresponds to the established user plane tunnel #1 (for example, including an IP address of the S-GW and TEID-U1 to TEID-UX), whether a service corresponding to TEID-U supports handover. If some services do not support handover, the MME filters out tunnel addresses of the services that do not support handover, and reserves a tunnel address of a service that supports handover. For example, if a service corresponding to TEID-U2 and a service corresponding to TEID-U3 do not support handover, the MME deletes TEID-U2 and TEID-U3 from the tunnel address #1 of the S-GW, to obtain a tunnel address #1 of the S-GW after deletion, which is referred to as a tunnel address #2 of the S-GW. For example, the tunnel address #2 of the S-GW includes the IP address of the S-GW, TEID-U1, and TEID-U4 to TEID-UX. It should be understood that the MME correspondingly updates a tunnel address of a P-GW, for example, updates a tunnel address #1 of the P-GW to a tunnel address #2 of the P-GW. In this case, it is equivalent to canceling a part of the established user plane tunnel #1 by the MME.

In this way, the MME includes the tunnel address of the S-GW after filtering in the handover request message #1, and sends the handover request message #1 to the PF. The handover request #1 is for requesting the target RAN in the service range of the PF to establish a context of the UE. The tunnel address #2 of the S-GW may be carried in an EPS bearer to setup information element of the handover request #1.

S904: The PF sends a handover request #2 to the RAN 2.

Correspondingly, the RAN 2 receives the handover request #2 from the PF.

After receiving the handover request #1, the PF configures a tunnel address #3 of the PF based on the tunnel address #2 of the S-GW. The tunnel address #3 of the PF is used to establish a user plane tunnel #3 that carries the user plane data of the UE between the PF and the RAN 2. For example, the tunnel address #3 of the PF includes an IP address of PF, TEID-PD1, and TEID-PD4 to TEID-PDX. Therefore, the tunnel address #2 of the S-GW in the handover request message #1 is replaced with the tunnel address #3 of the PF, to obtain the handover request #2. It should be understood that TEID-PDi corresponds to TEID-Ui.

The tunnel address #3 of the PF may reuse a tunnel address #1 that is of the PF and that corresponds to the user plane tunnel #2 between the PF and the RAN 1. For example, the tunnel address #1 of the PF includes the IP address of the PF and TEID-PS1 to TEID-PSX, and TEID-PD1 and TEID-PD4 to TEID-PDX in the tunnel address #3 of the PF may be respectively TEID-PS1 and TEID-PS4 to TEID-PSX.

In this case, the handover request #2 is for requesting the RAN 2 to establish the context of the UE, and the handover request #2 includes the tunnel address #3 of the PF.

It should be understood that the tunnel address #3 of the PF in S904 corresponds to the first tunnel address of the first network element, and the user plane tunnel #3 corresponds to the second user plane tunnel.

S905: The RAN 2 sends a handover request acknowledge (handover request ack) #2 to the PF.

Correspondingly, the PF receives the handover request acknowledge #2 from the RAN 2.

The handover request acknowledge #2 is a response message of the handover request #2 in S904, and the handover request acknowledge #2 includes a tunnel address of the RAN 2 and is used to establish the user plane tunnel #3. After receiving the handover request #2, the RAN 2 may determine, based on a resource usage status, an air interface transmission status, and the like of the RAN 2, whether transmission of a service corresponding to a currently received TEID can be supported. If the RAN 2 cannot support transmission of all services corresponding to currently received TEIDs, the RAN 2 may select, based on a resource status, a transmission status, and the like of the RAN 2, a part of services for transmission, and configure a tunnel address for the part of selected services. For example, the tunnel address of the RAN 2 that is configured by the RAN 2 includes an IP address of the RAN 2 and TEID-D4 to TEID-DX. It should be understood that TEID-Di corresponds to TEID-PDi.

In this way, after completing establishment of the UE context and configuration of the tunnel address of the RAN 2 based on the handover request #2, the RAN 2 includes the tunnel address of the RAN 2 in the handover request acknowledge #2 and sends the handover request acknowledge #2 to the PF.

S906: The PF sends a handover request acknowledge #1 to the MME.

Correspondingly, the MME receives the handover request acknowledge #1 from the PF.

The handover request acknowledge #1 includes a tunnel address #4 of the PF, the tunnel address # of the PF is used to establish a user plane tunnel #4, and the user plane tunnel #4 is used to carry the user plane data of the UE between the PF and the S-GW.

After receiving the handover request acknowledge #2, the PF may update the tunnel address #3 of the PF based on the tunnel address of the RAN 2, for example, delete a TEID-PU that is in the tunnel address #3 of the PF and that does not correspond to the tunnel address of the RAN 2, to obtain a final tunnel address used to establish the user plane tunnel #3 that carries the user plane data of the UE between the PF and the RAN 2. In addition, the PF may further configure the tunnel address #4 of the PF based on the tunnel address of the RAN 2. The tunnel address #4 of the PF is used to establish the user plane tunnel #4 that carries the user plane data of the UE between the PF and the S-GW.

The tunnel address #4 of the PF may be obtained by the PF by updating the tunnel address #2 of the PF based on the tunnel address of the RAN 2. The tunnel address #2 of the PF is a tunnel address that is of the PF and that corresponds to the established user plane tunnel #1. For example, the tunnel address #2 of the PF includes the IP address of the PF and TEID-PU1 to TEID-PUX, and the tunnel address #4 of the PF that is determined based on the tunnel address of the RAN 2 includes the IP address of the PF and TEID-PU4 to TEID-PUX. It should be understood that the tunnel address #2 of the PF includes the tunnel address #4 of the PF, the user plane tunnel #1 includes the user plane tunnel #4, and TEID-Di corresponds to TEID-PUi.

Therefore, the PF includes the tunnel address #4 of the PF in the handover request acknowledge #1 and sends the handover request acknowledge #1 to the MME.

S907: The MME sends a handover command (handover command) #1 to the PF.

Correspondingly, the PF receives the handover command #1 from the MME.

After receiving the handover request acknowledge #1, the MME may also update the tunnel address of the S-GW again based on the tunnel address #4 of the PF, for example, update the tunnel address #2 of the S-GW to a tunnel address #3 of the S-GW. The tunnel address #3 of the S-GW includes the IP address of the S-GW and TEID-U4 to TEID-UX. Therefore, it may be determined for which services corresponding user plane tunnels #1 are canceled, and for which services corresponding user plane tunnels #1 are retained. The retained user plane tunnel #1 is the user plane tunnel #4. As shown in the foregoing example, before the handover, there are X user plane tunnels #1 for the RAN 1, and after the handover, there are X-3 user plane tunnels #1 for the RAN 2.

In this way, after determining that the target RAN completes establishment of the UE context, the MME may send the handover command #1 to the PF, to trigger handover of the UE. The handover command #1 further carries indication information #3, indicating to release a tunnel resource related to the source RAN. For example, the indication information #3 is indicated by using a bearers to release information element.

S908: The PF sends a handover command #2 to the UE through the RAN 1.

Correspondingly, the UE receives the handover command #2 from the PF through the RAN 1.

After receiving the handover command #1, the PF may release, based on the indication information #3, the tunnel resource related to the source RAN, for example, a tunnel address of the RAN 1 and the tunnel address #2 of the PF that correspond to the user plane tunnel #2 established between the RAN 1 and the PF, and send the handover command #2 to the UE through the RAN 2, to indicate the UE to be handed over to the RAN 2.

The indication information #3 corresponds to the third indication information.

S909: The UE sends a handover confirm (handover confirm) to the RAN 2.

Correspondingly, the RAN 2 receives the handover confirm from the UE.

After receiving the handover command #2, the UE is handed over from the RAN 1 to the RAN 2. After being handed over to the RAN 2, the UE feeds back the handover confirm, to indicate that handover is completed.

S910: The RAN 2 sends a handover notify (handover notify) #1 to the PF.

Correspondingly, the PF receives the handover notify #1 from the RAN 2.

After determining that the UE is handed over to and accesses the RAN 2, the RAN 2 may send the handover notify #1 to the PF, to notify that the handover of the UE is currently completed. The handover notify #1 includes the RAN 2 ID.

S911: The PF sends a handover notify #2 to the MME.

Correspondingly, the MME receives the handover notify #2 from the PF.

After receiving the handover notify #1, the PF may replace the RAN 2 ID in the handover notify #1 with the PF ID to obtain the handover notify #2, to notify the MME that the handover of the UE is currently completed.

Further, after the MME determines that the handover of the UE is completed, the MME may further send a UE context release command to the RAN 1 through the PF, to trigger the RAN 1 to release the context of the UE.

In this way, the tunnel address of the RAN 2 and the tunnel address #3 of the PF are used to establish a tunnel that carries the user plane data of the UE between the RAN 1 and the PF, and the tunnel address #4 of the PF and the tunnel address #3 of the S-GW are used to establish a tunnel that carries the user plane data of the UE between the PF and the S-GW. In the scenario shown in FIG. 9, the first network element may still implement user plane switching and connection management based on the established user plane tunnel #1.

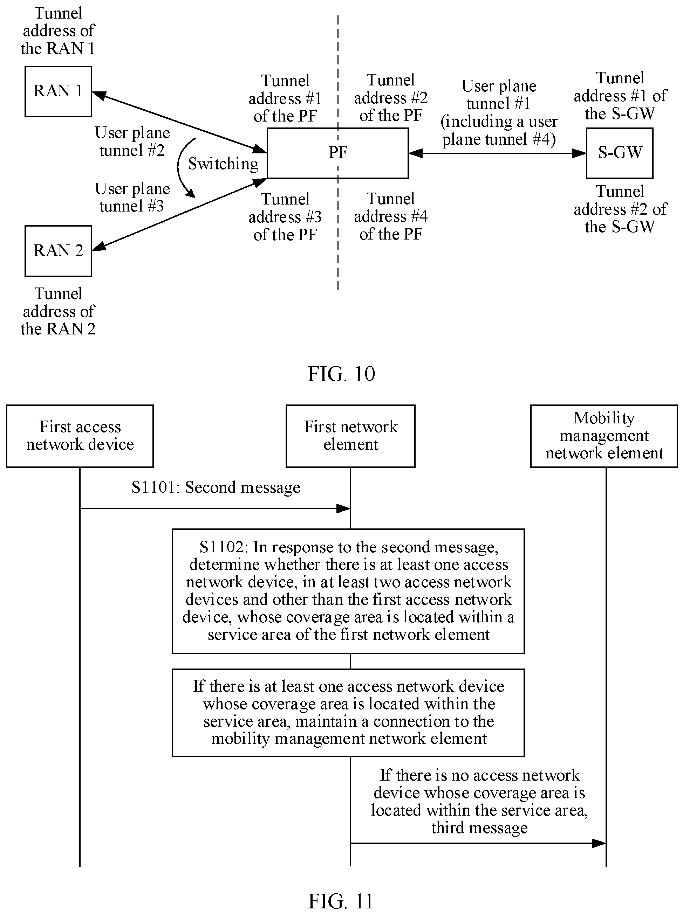

The user plane tunnel established based on the handover procedure shown in FIG. 8 or FIG. 9 may be shown in FIG. 10.

It should be understood that FIG. 8 or FIG. 9 mainly describes a process of implementing user plane connection management during handover in this solution. For specific descriptions of exchanged messages, refer to related descriptions in an X2-based or S1-based handover procedure in a 4G terrestrial communication scenario. Details are not described herein.

FIG. 6 to FIG. 9 mainly describe PF-based user plane connection management. Embodiments of this application further provides a communication method, to implement control plane connection management based on a PF. The communication method is applicable to the connection between the access network device and the core network element in FIG. 6 to FIG. 9. For example, FIG. 11 is a schematic flowchart of still another communication method according to an embodiment of this application.

As shown in FIG. 11, the communication method includes the following steps.

S1101: A first access network device sends a second message to a first network element.

Correspondingly, the first network element receives the second message from the first access network device.

The first network element is configured to serve as a proxy for at least two access network devices to communicate with a mobility management network element, and the at least two access network devices include the first access network device. In other words, that the first network element serves as a proxy for access network devices (at least two) located in a service area of the first network element to communicate with the mobility management network element may be understood as that the first network element maps the first network element to a logical access network device or a virtual access network device, that is, the first network element may map each access network device that actually exists in a service range of the first network element to the logical access network device or the virtual access network device, and then communicate with the mobility management network element. For specific descriptions of the first network element, refer to related descriptions in the foregoing embodiments. Details are not described herein.

The mobility management network element establishes a connection to the first network element. As shown in FIG. 3a and FIG. 3b, in an EPC architecture, each of the at least two access network devices communicates with the first network element through an S1-MME interface, and the first network element communicates with the mobility management network element through an S1-MME interface; and in a 5GC architecture, each of the at least two access network devices communicates with the first network element through an N2 interface, and the first network element communicates with the mobility management network element through an N2 interface. For a process in which the first network element serves as a proxy for each access network device in the service area of the first network element to establish a communication connection to the mobility management network element, refer to related descriptions in the following method embodiment of FIG. 11. Details are not described herein.

The service area of the first network element includes coverage areas supported, in different service time periods, by each of the at least two access network devices. In other words, due to movement of the access network device, the access network device has at least one coverage area in the service area of the first network element in different time periods. Each access network device in the service area of the first network element correspondingly has one piece of coverage information, and the coverage information indicates coverage areas supported by the access network device in different service time periods.

In this embodiment of this application, the first access network device is used as an example, and coverage information corresponding to the first access network device in the service area may be obtained through prediction based on ephemeris information of a satellite on which the first access network device is located, or may be preconfigured. This is not limited herein.

In a possible implementation, the coverage information of the first access network device may include a TAI corresponding to a coverage area supported by the first access network device in the service area of the first network element and a service time period corresponding to the supported coverage area. In other words, the first access network device corresponds to different coverage areas in different time periods. For example, the following Table 1 shows a format of the coverage information of the first access network device. As shown in Table 1, in a time period T0 to T1, TAIs corresponding to coverage areas supported by the first access network device include a TAI #11 and a TAI #12; in a time period T1 to T2, TAIs corresponding to coverage areas supported by the first access network device include the TAI #12 and a TAI #13; and in a time period T2 to T3, TAIs corresponding to coverage areas supported by the first access network device include the TAI #13 and a TAI #14.

**Table 1**

| Service time period | TAIs corresponding to coverage areas |
|---|---|
| T0 to T1 | TAI #11, TAI #12 |
| T1 to T2 | TAI #12, TAI #13 |
| T2 to T3 | TAI #13, TAI #14 |

When the first access network device is to move out of the service area operated by the first network element due to movement of the first access network device, the first access network device sends the second message to the first network element. The second message is used to notify the first network element that the first access network device is to move out of the service area of the first network element.

Alternatively, it may be understood that the first access network device cannot establish a connection to the first network element because the first access network device is to move out of the service area of the first network element. In this case, the first access network device disconnects a connection to the first network element by sending the second message. Therefore, alternatively, the second message is used to notify the first network element that the first access network device disconnects the connection to the first network element.

In a possible implementation, the second message is of a defined or newly defined message type that has the foregoing function, for example, is a newly defined S1/N2 release (Release) message. For another example, the second message reuses a shutdown message in SCTP.

In another possible implementation, the second message reuses a defined message, for example, a configuration update (configuration update) message, and the foregoing function is implemented by setting fourth indication information in the defined message. To be specific, the second message may include the fourth indication information, and the fourth indication information indicates that the first access network device is to move out of the service area of the first network element, or the fourth indication information indicates that the first access network device disconnects the connection to the first network element.

In this implementation, in a possible design, the fourth indication information may be a TAI having a preset value and corresponding to an area covered by the first access network device before the first access network device moves out of the service area. In other words, the fourth indication information may provide an indication by using a TAI with a special value. The TAI is a TAI supported by the first access network device in the service area of the first network element. For example, the fourth indication information is a TAI in a specific format such as an all-0/all-1 format.

In a possible implementation, before S1101, the first network element may further send a TAI corresponding to the service area to the mobility management network element, to notify the mobility management network element of a coverage area supported in the service area of the first network element. The TAI corresponding to the service area includes a TAI supported by each of the at least two access network devices in the service area of the first network element.

In a possible case, with launch of satellites, there are sufficient access network devices to provide coverage in the service area of the first network element. In this case, the service area of the first network element may be always covered by access network devices. For example, when an access network device with a specific coverage area in the service area leaves, another access network device continues to provide coverage. For this case, the first network element may further send fifth indication information to the mobility management network element, where the fifth indication information indicates that a coverage area indicated by the TAI corresponding to the service area is continuously covered by an access network device, to notify the mobility management network element that the service area of the first network element is always covered by access network devices, so that service continuity can be ensured.

S1102: In response to the second message, the first network element determines whether there is at least one access network device, in the at least two access network devices and other than the first access network device, whose coverage area is located within the service area of the first network element.

After receiving the second message, the first network element may determine, based on the second message, that the first access network device is currently unavailable, or that the connection between the first access network device and the first network element is unavailable, and disconnect the connection to the first access network device. In this way, the first network element may determine, based on triggering of the second message, whether there is at least one access network device, other than the first access network device, whose coverage area is located within the service area. That a coverage area of the access network device is located in the service area of the first network element may mean that the coverage area of the access network device is included in the service area of the first network element, or may mean that the coverage area of the access network device is partially included in the service area of the first network element. This is not limited.

For example, the first network element has established connections to all five access network devices in the service range of the first network element. After receiving the second message of the first access network device in the five access network devices, the first network element determines whether there is another access network device, in the five access network devices that have established the connections, that sends a corresponding second message; or determines, based on coverage information of other access network devices that have established the connections, whether there is another access network device whose coverage area is currently located in the service area of the first network element.

When there is at least one access network device, in the at least two access network devices and other than the first access network device, whose coverage area is located within the service area, the first network element maintains the connection between the first network element and the mobility management network element. In other words, the first network element does not disconnect the connection between the first network element and the mobility management network element, and continues to serve as a proxy for the at least one access network device whose coverage area is located within the service area to communicate with the mobility management network element through the connection between the first network element and the mobility management network element.

When there is no access network device, in the at least two access network devices, whose coverage area is located within the service area, the first network element sends a third message to the mobility management network element. The third message is for releasing the connection between the first network element and the mobility management network element. For example, the third message is an S1/N2 release (Release) message. In other words, when the first network element determines that no access network device provides coverage in the service area of the first network element, the first network element disconnects the connection to the mobility management network element, to notify the network that an abnormality occurs on a service on a first network element side.

Optionally, the third message may include a cause for disconnecting the connection, for example, that the service area is not served by any access network device.

In this embodiment of this application, the connection between the first network element and the mobility management network element may be an SCTP connection.

Based on the communication method shown in FIG. 11, the first network element communicates with the mobility management network element by serving as a proxy for the at least two access network devices in the service area of the first network element. When the first access network device in the service area of the first network element disconnects the connection to the first network element because the first access network device is to move out of the service area, the first network element may determine whether there is still at least one other access network device, in the service area of the first network element, for which the first network element serves as a proxy and whose coverage area is located within the service area, to determine whether to disconnect the connection to the mobility management network element. In this way, in an aspect, an incorrect operation and maintenance management system alarm caused by unavoidable disconnection due to movement of an access network device can be avoided; and in another aspect, disconnection between another access network device and the mobility management network element caused by movement of an access network device can be avoided, so that the another access network device does not need to re-establish a connection to the mobility management network element, and therefore signaling overheads can be reduced.

The following describes in detail the communication method shown in FIG. 11 with reference to a 4G network architecture. As shown in FIG. 12, an example in which the first network element is a PF, the first access network device is a RAN 1, and the mobility management network element is an MME is used, and the communication method includes the following steps.

S1201: The RAN 1 sends a setup request (setup request) #1 to the PF.

Correspondingly, the PF receives the setup request #1 from the RAN 1.

The setup request #1 is for requesting to establish a connection to a network, and the setup request #1 includes a TAI corresponding to an area covered by the RAN 1 when the RAN 1 is started and a RAN 1 ID. In this case, it may be considered that a setup request sent to the MME is received by the PF (or intercepted by the PF, where another expression may also be used). In this embodiment of this application, all RANs located in a service area of the PF may establish connections to the MME through the PF.

S1202: The PF sends a setup request #2 or a configuration update (configuration update) message #1 to the MME.

Correspondingly, the mobility management network element receives the setup request #2 or the configuration update message #1 from the PF.

After receiving the setup request #1, the PF may determine coverage information of the RAN 1 based on the RAN 1 ID. The coverage information of the RAN 1 may include a TAI corresponding to a coverage area supported by the RAN 1 in a coverage area of the PF and a service time period corresponding to the TAI. For specific descriptions of the coverage information, refer to related descriptions of the coverage information in S1101. Details are not described.

If the RAN 1 is the first started RAN managed by the PF, the PF sends the setup request #2 to the MME. The setup request #2 includes a PF ID and a TAI corresponding to a coverage area supported by the PF, and the setup request #2 is obtained by modifying the setup request #1. For specific descriptions of the PF ID, refer to related descriptions of the identifier of the first network element or the PF ID in the foregoing method embodiments. Details are not described. The TAI corresponding to the coverage area supported by the PF includes the TAI corresponding to the coverage area supported by the RAN 1. In this way, the MME establishes a connection to the PF based on the setup request #2. The TAI corresponding to the coverage area supported by the PF corresponds to the TAI corresponding to the service area in S1101.

If the RAN 1 is not the first started RAN managed by the PF, the PF sends the configuration update message #1 to the MME. The configuration update message #1 includes a PF ID and a TAI corresponding to a newly added coverage area of the PF, and the TAI corresponding to the newly added coverage area of the PF includes the TAI corresponding to the coverage area supported by the RAN 1. In this scenario, updating coverage information is performed when the MME has established a connection to the PF.

In a possible case, for example, when there are sufficient RANs that provide coverage in the service area of the PF, the setup request #2 or the configuration update message #1 may further include indication information #4, and the indication information #4 indicates that the coverage area supported by the PF is continuously covered by a RAN. The indication information #4 corresponds to the fifth indication information in S1101.

S1203: The RAN 1 sends a configuration update message #2 to the PF. Correspondingly, the PF receives the configuration update message #2 from the RAN 1.

The configuration update message #2 includes a TAI in an all-0/all-1 format, indicating that the RAN 1 is to move out of the service area of the PF, and a previous connection between the RAN 1 and the PF is disconnected. S1203 corresponds to S1101, and the TAI in the all-0/all-1 format corresponds to the fourth indication information. For a specific implementation process, refer to related descriptions in S1101. Details are not described herein.

S1204: The PF determines whether to maintain the connection to the MME.

After receiving the configuration update message #2, the PF determines, based on the TAI in the all-0/all-1 format, that the RAN 1 is currently unavailable. The PF determines whether there is a RAN that currently provides coverage in the service area of the PF. If there is no RAN that provides coverage, the PF sends a release (release) message to the MME or disconnects the connection to the MME, to notify a network side that an abnormality currently occurs on a service on a RAN side. If there is a RAN that provides coverage, the PF maintains the connection to the MME.

S1204 corresponds to S1102. For a specific implementation process, refer to related descriptions in S1102. Details are not described herein.

FIG. 6 to FIG. 12 show a specific process of implementing user plane or control plane connection management within a service range of a same PF. In addition, embodiments of this application further provide a communication method, to describe a specific process of implementing user plane connection management during handover of UE within service ranges of different PFs.

For example, as shown in FIG. 13, the communication method is applied to a case in which a terminal device requests to be handed over from a source access network device to a target access network device, and the communication method includes the following steps.

S1301: The source access network device sends a fourth message to a first network element.

Correspondingly, the first network element receives the fourth message from the source access network device.

The fourth message is related to handover of the terminal device between access network devices. For example, the fourth message may be a handover required (handover required) message. The fourth message may include an identifier of the target access network device and a TAI corresponding to the target access network device. The TAI corresponding to the target access network device may be a TAI corresponding to a current coverage area of the target access network device, or a TAI corresponding to a coverage area supported by the target access network device.

The first network element is configured to serve as a proxy for the source access network device to communicate with a first mobility management network element corresponding to the first network element. In this embodiment of this application, the first network element may serve as a proxy for at least two access network devices in a service area of the first network element to communicate with the first mobility management network element corresponding to the first network element. In other words, a coverage area of the source access network device is located in the service area of the first network element. For specific descriptions of the first network element, refer to related descriptions in the foregoing method embodiments. Details are not described herein.

For an implementation process in which the source access network device selects the target access network device, refer to related descriptions in an existing cell handover procedure. Details are not described.

S1302: The first network element sends an identifier of a second network element to the first mobility management network element based on the identifier of the target access network device and the TAI corresponding to the target access network device.

After receiving the fourth message, the first network element may determine that handover needs to be currently performed for the terminal device, so that the first network element may determine, based on the TAI corresponding to the target access network device in the fourth message, that a coverage range of the target access network device is not within the service area operated by the first network element, that is, the target access network device is currently not an access network device in a management range of the first network element. Therefore, the first network element may determine, based on the identifier of the target access network device, the second network element corresponding to a service area to which the coverage area of the target access network device belongs.

The second network element is configured to serve as a proxy for the target access network device and communicate with a second mobility management network element corresponding to the second network element, and operate a service area different from that of the first network element. The second network element may serve as a proxy for at least two access network devices in the service area of the second network element to communicate with the second mobility management network element corresponding to the second network element. In other words, the coverage area of the target access network device is located in the service area of the second network element. For specific descriptions of the second network element, refer to related descriptions of the first network element. Details are not described.

In a possible implementation, the first network element stores a first correspondence, and the first correspondence includes a correspondence between the target access network device and the second network element. In other words, the first network element is preconfigured with a correspondence between different access network devices and corresponding proxy network elements, for example, a correspondence between identifiers of the access network devices and identifiers of the corresponding proxy network elements. In this way, after determining that the target access network device is not an access network device in the service range of the first network element, the first network element may determine the identifier of the second network element based on the identifier of the target access network device and the first correspondence, and send the identifier of the second network element to the first mobility management network element.

In a possible implementation, the identifier of the second network element may be carried in a handover required message for sending.

S1303: The first mobility management network element sends a fifth message to the second mobility management network element through the first network element and the second network element based on the identifier of the second network element.

Correspondingly, the second mobility management network element receives the fifth message from the first mobility management network element through the first network element and the second network element.

The fifth message may be used to request the second mobility management network element to trigger handover of the terminal device to the target access network device, to implement handover of the terminal device. In other words, the first mobility management network element triggers, through a proxy network element corresponding to the first mobility management network element and a proxy network element corresponding to the target access network device, the mobility management network element corresponding to the target access network device to initiate a handover indication. Specifically, the fifth message may be a forward relocation request (forward relocation request) message.

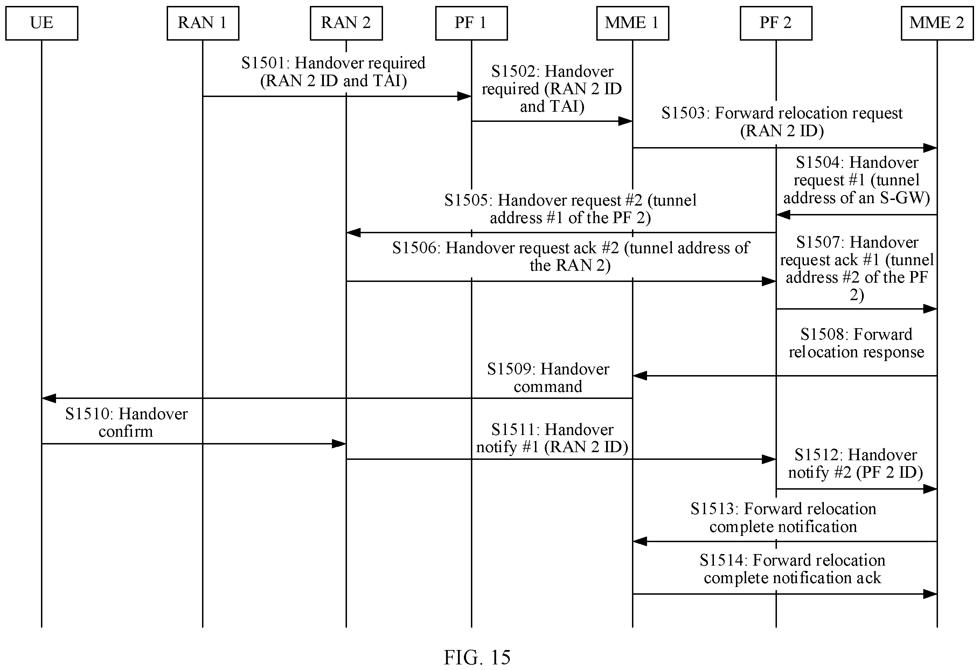

In a possible scenario, after receiving the fourth message and determining, based on the TAI corresponding to the target access network device, that the target access network device is currently not an access network device in the management range of the first network element, the first network element may not further determine the second network element corresponding to the target access network device, but directly send the fourth message to the first mobility management network element, that is, send the identifier and the TAI of the target access network device to the first mobility management network element without performing any processing on the fourth message. Correspondingly, after receiving the fourth message, the first mobility management network element may select, based on the TAI of the target access network device, the second mobility management network element corresponding to the target access network device, and send the ID of the target access network device to the second mobility management network element, to trigger the second mobility management network element to trigger handover of the terminal device to the target access network device through the second network element corresponding to the second mobility management network element. For a specific implementation process, refer to related descriptions in the following method embodiment of FIG. 15. Details are not described.

Based on the communication method shown in FIG. 13, in a scenario in which handover is performed across proxy service areas, the first network element corresponding to a service area in which the coverage area of the source access network device is located may determine, based on the identifier and the TAI of the target access network device, the second network element corresponding to a service area in which the coverage area of the target access network device is located, to trigger the mobility management network element corresponding to the second network element to indicate the terminal device to be handed over from the source access network device to the target access network device.

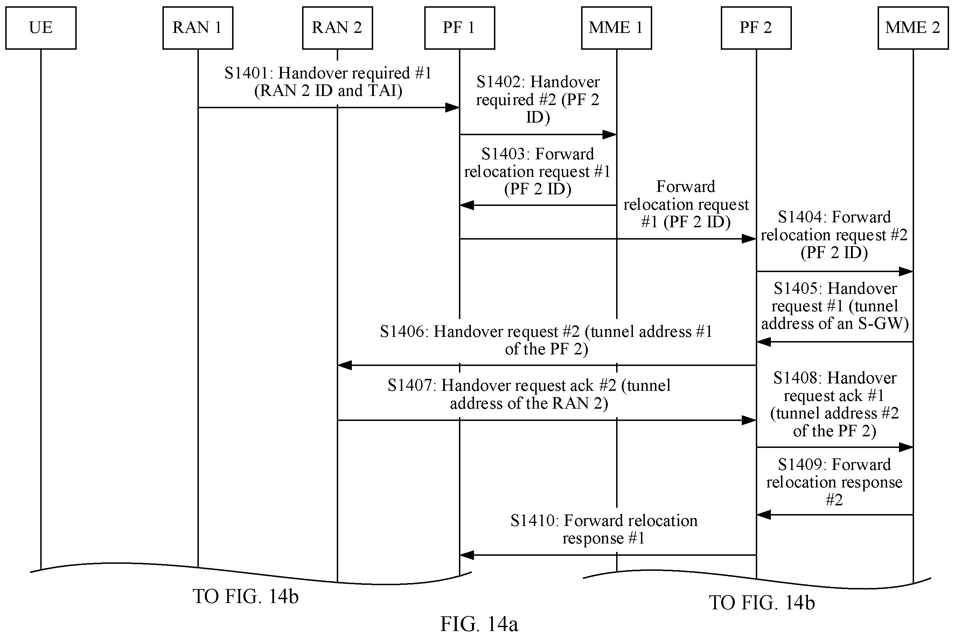

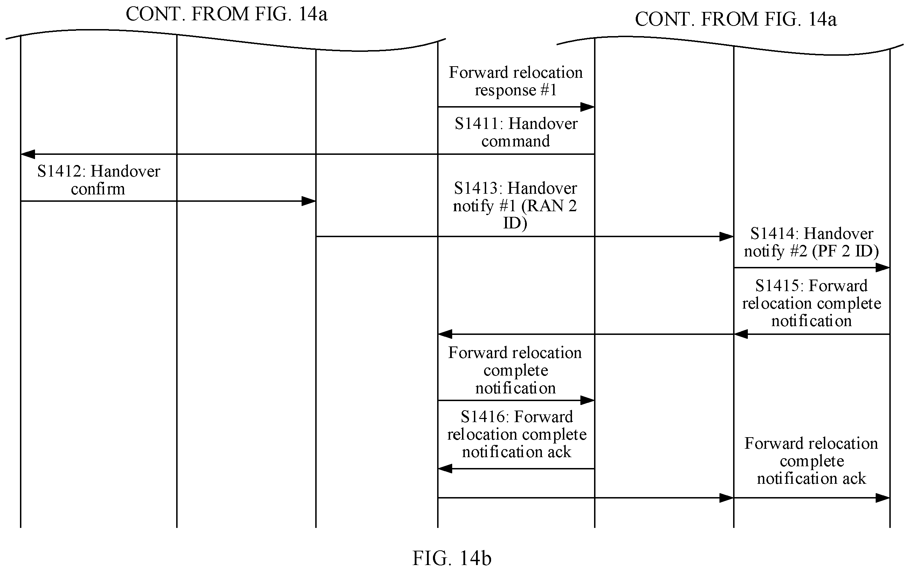

The following describes in detail the communication method shown in FIG. 13 with reference to a 4G network architecture. As shown in FIG. 14a and FIG. 14b, an example in which the terminal device is UE, the source access network device is a RAN 1, the first network element is a PF 1, the first mobility management network element is an MME 1, the target access network device is a RAN 2, the second network element is a PF 2, and the second mobility management network element is an MME 2 is used, and the communication method includes the following steps.

S1401: The RAN 1 sends a handover required (handover required) #1 to the PF 1.

Correspondingly, the PF 1 receives the handover required #1 from the RAN 1.

The handover required #1 is used to indicate a network to prepare for the handover, and the handover required #1 includes a RAN 2 ID and a RAN 2 TAI.

S1402: The PF 1 sends a handover required #2 to the MME 1.

Correspondingly, the MME 1 receives the handover required #2 from the PF 1.

The handover required #2 includes a PF 2 ID, and the PF 2 is a PF corresponding to a service area in which the RAN 2 is located.

After receiving the handover required, the PF 1 may determine, based on the RAN 2 ID and the RAN 2 TAI in the handover required, an identifier of a PF corresponding to a service area in which a coverage area indicated by the RAN 2 TAI is located, that is, the PF 2 ID, and include the PF 2 ID in the handover required #2 and send the handover required #2 to the MME 1. For a specific implementation process of S1402, refer to related descriptions in S1302. Details are not described herein.

S1403: The MME 1 sends a forward relocation request (forward relocation request) #1 to the PF 2 through the PF1.

Correspondingly, the PF 2 receives the forward relocation request #1 from the MME 1 through the PF 1.

The forward relocation request #1 includes the PF 2 ID.

S1404: The PF 2 sends a forward relocation request #2 to the MME 2.

Correspondingly, the MME 2 receives the forward relocation request #2 from the PF 2.

The forward relocation request #2 includes the PF 2 ID.

After receiving the forward relocation request #1, the PF 2 generates the forward relocation request #2 based on the forward relocation request #1, and sends the forward relocation request #2 to an MME associated with the PF 2, that is, the MME 2.

S1405: The MME 2 sends a handover request (handover request) #1 to the PF 2.

Correspondingly, the PF 2 receives the handover request #1 from the MME 2.

After receiving the forward relocation request #2, the MME 2 may select, based on the forward relocation request #2 (for example, information related to services for transmission during handover, used to determine which services do not support handover), an S-GW to establish a user plane tunnel for carrying user plane data of the UE, and send the handover request #1 to the PF 2. The handover request #1 includes a tunnel address of the S-GW, and the tunnel address of the S-GW includes an IP address of the S-GW and TEID-U1 to TEID-UX, and the tunnel address of the S-GW is used to carry the user plane data of the UE between the PF 2 and the S-GW.

S1406: The PF 2 sends a handover request #2 to the RAN 2.

Correspondingly, the RAN 2 receives the handover request #2 from the PF 2.

After receiving the handover request #1, the PF 2 configures a tunnel address #1 of the PF 2 based on the tunnel address of the S-GW in the handover request #1. The tunnel address #1 of the PF 2 includes an IP address of the PF 2 and TEID-PD1 to TEID-PDX, and the tunnel address #1 of the PF 2 is used to establish a user plane tunnel that carries the user plane data of the UE between the PF 2 and the RAN 2.

S1407: The RAN 2 sends a handover request acknowledge (handover request ack) #2 to the PF 2.

Correspondingly, the PF 2 receives the handover request acknowledge #2 from the RAN 2.

The handover request acknowledge #2 includes a tunnel address of the RAN 2, and the tunnel address of the RAN 2 is configured based on the tunnel address #1 of the PF 2. For example, the tunnel address of the RAN 2 includes an IP address of the RAN 2 and TEID-D1 to TEID-DX.

S1408: The PF 2 sends a handover request acknowledge #1 to the MME 2.

Correspondingly, the MME 2 receives the handover request acknowledge #1 from the PF 2.

The PF 2 configures a tunnel address #2 of the PF 2 based on the tunnel address of the RAN 2 in the handover request acknowledge #2. The tunnel address #2 of the PF 2 includes the IP address of the PF 2 and TEID-PU1 to TEID-PUX, and is used to establish a user plane tunnel that carries the user plane data of the UE between the PF 2 and the S-GW. In addition, the PF 2 replaces the tunnel address of the RAN 2 in the handover request acknowledge #2 with the tunnel address #2 of the PF 2 to obtain the handover request acknowledge #1, and sends the handover request acknowledge #1 to the MME 2.

S1409: The MME 2 sends a forward relocation response (forward relocation response) #2 to the PF 2.

Correspondingly, the PF 2 receives the forward relocation response #2 from the MME 2.

S1410: The PF 2 sends a forward relocation response #1 to the MME 1 through the PF 1.

Correspondingly, the MME 1 receives the forward relocation response #1 from the PF 2 through the PF 1.

S1411: The MME 1 sends a handover command (handover command) to the UE through the PF 1 and the RAN 1.

Correspondingly, the UE receives the handover command from the MME 1 through the PF 1 and the RAN 1.

S1412: The UE sends a handover confirm (handover confirm) to the RAN 2.

Correspondingly, the RAN 2 receives the handover confirm from the UE.

S1413: The RAN 2 sends a handover notify (handover notify) #1 to the PF 2.

Correspondingly, the PF 2 receives the handover notify #1 from the RAN 2.

The handover notify #1 includes the RAN 2 ID and a mapped cell ID of the RAN 2.

S1414: The PF 2 sends a handover notify #2 to the MME 2.

Correspondingly, the MME 2 receives the handover notify #2 from the PF 2.

The handover notify #2 includes the PF 2 ID and the mapped cell ID of the RAN 2.

S1415: The MME 2 sends a forward relocation complete notification (forward relocation complete notification) to the MME 1 through the PF 2 and the PF 1.

Correspondingly, the MME 1 receives the forward relocation complete notification from the MME 2 through the PF 2 and the PF 1.

S1416: The MME 1 sends a forward relocation complete acknowledge (forward relocation complete ack) to the MME 2 through the PF 1 and the PF 2.

Correspondingly, the MME 2 receives the forward relocation complete acknowledge from the MME 2 through the PF 1 and the PF 2.

Further, after the MME 1 determines that the handover of the UE is completed, the MME 1 may further send a UE context release command to the RAN 1 through the PF 1, to trigger the RAN 1 to release a context of the UE.

For another example, FIG. 15 shows a process in which a first mobility management network element directly triggers a second mobility management network element to perform terminal device handover in a cross-PF handover scenario. The communication method includes the following steps.

S1501: A RAN 1 sends a handover required (handover required) to a PF 1.

Correspondingly, the PF 1 receives the handover required from the RAN 1.

The handover required is used to indicate a network to prepare for the handover, and the handover required #1 includes a RAN 2 ID and a RAN 2 TAI.

S1502: The PF 1 sends a handover required to an MME 1.

Correspondingly, the MME 1 receives the handover required from the PF 1.

After receiving the handover required, the PF determines, based on the RAN 2 TAI, that a RAN 2 is currently not in a management range of the PF, and the PF 1 forwards the handover required to the MME 1.

S1503: The MME 1 sends a forward relocation request (forward relocation request) to an MME 2.

Correspondingly, the MME 2 receives the forward relocation request from the MME 1.

After receiving the handover required, the MME 1 may determine, based on the RAN 2 TAI, an MME corresponding to the RAN 2, that is, the MME 2, and send the forward relocation request #1 to the MME 2, to indicate the MME 2 to prepare for the handover. The forward relocation request includes the RAN 2 ID. In addition, the MME 2 also selects a new S-GW for UE.

S1504: The MME 2 sends a handover request (handover request) #1 to a PF 2.

Correspondingly, the PF 2 receives the handover request #1 from the MME 2.

S1505: The PF 2 sends a handover request #2 to the RAN 2.

Correspondingly, the RAN 2 receives the handover request #2 from the PF 2.

S1506: The RAN 2 sends a handover request acknowledge (handover request ack) #2 to the PF 2.

Correspondingly, the PF 2 receives the handover request acknowledge #2 from the RAN 2.

S1507: The PF 2 sends a handover request acknowledge #1 to the MME 2.

Correspondingly, the MME 2 receives the handover request acknowledge #1 from the PF 2.

For a specific implementation process of S1504 to S1507, refer to related descriptions in S1405 to S1408. Details are not described herein.

S1508: The MME 2 sends a forward relocation response (forward relocation response) to the MME 1.

Correspondingly, the MME 1 receives the forward relocation response from the MME 2.

S1509: The MME 1 sends a handover command (handover command) to the UE through the PF 1 and the RAN 1.

Correspondingly, the UE receives the handover command from the MME 1 through the PF 1 and the RAN 1.

S1510: The UE sends a handover confirm (handover confirm) to the RAN 2.

Correspondingly, the RAN 2 receives the handover confirm from the UE.

S1511: The RAN 2 sends a handover notify (handover notify) #1 to the PF 2.

Correspondingly, the PF 2 receives the handover notify #1 from the RAN 2.

The handover notify #1 includes the RAN 2 ID and a mapped cell ID of the RAN 2.

S1512: The PF 2 sends a handover notify #2 to the MME 2.

Correspondingly, the MME 2 receives the handover notify #2 from the PF 2.

The handover notify #2 includes a PF 2 ID and the mapped cell ID of the RAN 2.

S1513: The MME 2 sends a forward relocation complete notification (forward relocation complete notification) to the MME 1.

Correspondingly, the MME 1 receives the forward relocation complete notification from the MME 2.

S1514: The MME 1 sends a forward relocation complete acknowledge (forward relocation complete ack) to the MME 2.

Correspondingly, the MME 2 receives the forward relocation complete acknowledge from the MME 2.

Further, after the MME 1 determines that the handover of the UE is completed, the MME 1 may further send a UE context release command to the RAN 1, to trigger the RAN 1 to release a context of the UE.

FIG. 7 to FIG. 10, FIG. 12, FIG. 14a, FIG. 14b, and FIG. 15 are all described based on the 4G network architecture. The communication method provided in embodiments of this application is also applicable to a 5G network architecture. Specific implementation based on 5G network architecture is similar to that based on the 4G network architecture, and only names of corresponding devices, network elements, messages, or the like in the procedure described based on the 4G network architecture need to be replaced with names of corresponding devices, network elements, messages, and the like in the 5G network architecture. Details are not described.

In the foregoing embodiments, the method and/or steps implemented by the first network element may alternatively be implemented by a part (for example, a processor, a chip, a chip system, a circuit, a logical module, or software) that can be used in the first network element; the method and/or steps implemented by the mobility management network element may alternatively be implemented by a part (for example, a processor, a chip, a chip system, a circuit, a logical module, or software) that can be used in the mobility management network element; and the method and/or steps implemented by the access network device may alternatively be implemented by a part (for example, a processor, a chip, a chip system, a circuit, a logical module, a DU, or software) that can be used in the access network device. For example, when the foregoing embodiments are performed by the DU in the access network device, a sending or receiving step performed by the access network device may be replaced with sending or receiving by the DU, to be specific, sending from the DU to a RU or receiving by the DU from the RU.

The foregoing mainly describes the solutions provided in this application. Correspondingly, this application further provides a communication apparatus. The communication apparatus is configured to implement various methods in the foregoing method embodiments. The communication apparatus may be the first network element in the method embodiments, an apparatus including the first network element, or a part, for example, a chip or a chip system, that can be used in the first network element. Alternatively, the communication apparatus may be the mobility management network element in the method embodiments, an apparatus including the mobility management network element, or a part, for example, a chip or a chip system, that can be used in the mobility management network element. Alternatively, the communication apparatus may be the access network device in the method embodiments, an apparatus including the access network device, or a part, for example, a chip or a chip system, that can be used in the access network device.

In some embodiments, to implement the foregoing functions, the communication apparatus includes a corresponding hardware structure and/or software module for performing each function. A person skilled in the art should easily be aware that, in combination with units and algorithm steps of the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

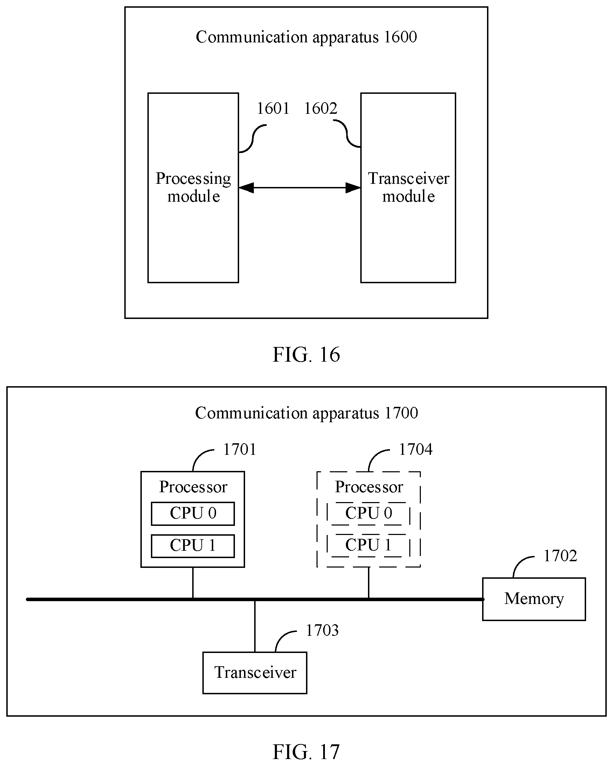

For example, the communication apparatus is the first network element, the mobility management network element, or the access network device in the method embodiments. FIG. 16 is a diagram of a structure of a communication apparatus according to an embodiment of this application. As shown in FIG. 16, the communication apparatus 1600 includes a processing module 1601 and a transceiver module 1602. The processing module 1601 is configured to perform a processing function of the first network element, the mobility management network element, or the access network device in the method embodiments. The transceiver module 1602 is configured to perform receiving and sending functions of the first network element, the mobility management network element, or the access network device in the method embodiments.

All related content of the steps in the method embodiments may be cited in function descriptions of the corresponding functional modules. Details are not described herein again.

The communication apparatus 1600 provided in this embodiment may perform the foregoing method. Therefore, for technical effect that can be achieved by the communication apparatus, refer to the foregoing method embodiment. Details are not described herein again.

In a possible design solution, in this embodiment of this application, the transceiver module 1602 may include a receiving module and a sending module (not shown in FIG. 16). The sending module and the receiving module are respectively configured to implement a sending function and a receiving function of the communication apparatus 1600.

In a possible design solution, the communication apparatus 1600 may further include a storage module (not shown in FIG. 16), and the storage module stores a program or instructions. When the processing module 1601 executes the program or the instructions, the communication apparatus 1600 may perform a function of the first network element, the mobility management network element, or the access network device in the method shown in any one of FIG. 6 to FIG. 9 or FIG. 11 to FIG. 15.

In some embodiments, the processing module 1601 in the communication apparatus 1600 may be implemented by a processor or a processor-related circuit component, and may be a processor or a processing unit. The transceiver module 1602 may be implemented by a transceiver or a transceiver-related circuit component, and may be a transceiver or a transceiver unit.

For example, FIG. 17 is a diagram of a structure of another communication apparatus according to an embodiment of this application. The communication apparatus may be the first network element, the mobility management network element, or the access network device in the method embodiments, or may be a chip (system) or another part or component that can be disposed in the first network element, the mobility management network element, or the access network device. As shown in FIG. 17, the communication apparatus 1700 may include a processor 1701. In a possible design solution, the communication apparatus 1700 may further include a memory 1702 and/or a transceiver 1703. The processor 1701 is coupled to the memory 1702 and the transceiver 1703, for example, may be connected to the memory 1702 and the transceiver 1703 through a communication bus.

The following describes in detail each part of the communication apparatus 1700 with reference to FIG. 17.

The processor 1701 is a control center of the communication apparatus 1700, and may be one processor or may be a collective term of a plurality of processing elements. For example, the processor 1701 includes one or more central processing units (central processing units, CPUs), or may be an application-specific integrated circuit (application-specific integrated circuit, ASIC), or may be one or more integrated circuits configured to implement embodiments of this application, for example, one or more microprocessors (digital signal processors, DSPs), or one or more field programmable gate arrays (field programmable gate arrays, FPGAs).

In a possible design solution, the processor 1701 may perform various functions of the communication apparatus 1700 by running or executing a software program stored in the memory 1702 and invoking data stored in the memory 1702.

During specific implementation, in an embodiment, the processor 1701 may include one or more CPUs, for example, a CPU 0 and a CPU 1 in FIG. 17.

During specific implementation, in an embodiment, the communication apparatus 1700 may also include a plurality of processors, for example, the processor 1701 and a processor 1704 shown in FIG. 17. Each of the processors may be a single-core processor, or may be a multi-core processor. The processor herein may be one or more devices, circuits, and/or processing cores configured to process data (for example, computer program instructions).

The memory 1702 is configured to store a software program for performing the solutions of this application, and the processor 1701 controls execution. For a specific implementation, refer to the foregoing method embodiments. Details are not described herein again.

In a possible design solution, the memory 1702 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, the memory is not limited thereto. The memory 1702 may be integrated with the processor 1701, or may exist independently, and is coupled to the processor 1701 through an interface circuit (not shown in FIG. 17) of the communication apparatus 1700. This is not specifically limited in this embodiment of this application.

The transceiver 1703 is configured to communicate with another communication apparatus. For example, the communication apparatus 1700 is a terminal device, and the transceiver 1703 may be configured to communicate with an access network device or communicate with another terminal device. For another example, the communication apparatus 1700 is a network device, and the transceiver 1703 may be configured to communicate with a terminal device or communicate with another network device.

In a possible design solution, the transceiver 1703 may include a receiver and a transmitter (not separately shown in FIG. 17). The receiver is configured to implement a receiving function, and the transmitter is configured to implement a sending function.

In a possible design solution, the transceiver 1703 may be integrated with the processor 1701, or may exist independently, and is coupled to the processor 1701 through the interface circuit (not shown in FIG. 17) of the communication apparatus 1700. This is not specifically limited in this embodiment of this application.

It should be noted that the structure of the communication apparatus 1700 shown in FIG. 17 does not constitute a limitation on the communication apparatus. An actual communication apparatus may include more or fewer parts than those shown in the figure, or combine some parts, or use a different part arrangement.

In addition, for technical effect of the communication apparatus 1700, refer to the technical effect of the method in the method embodiments. Details are not described herein again.

An embodiment of this application further provides a computer-readable storage medium. The computer-readable storage medium stores a computer program or instructions. When the computer program or the instructions are executed by a computer, functions of the method embodiments are implemented.

An embodiment of this application further provides a computer program product. When the computer program product is executed by a computer, functions in the method embodiments are implemented.

An embodiment of this application further provides a communication system, including a first network element configured to implement the method embodiments.

Optionally, the communication system may further include a source access network device and/or a target access network device that are/is configured to implement the method embodiments.

An embodiment of this application further provides a communication system, including a first network element configured to implement the method embodiments and a first mobility management network element configured to implement the method embodiments.

Optionally, the communication system may further include a second network element and/or a second mobility management network element that are/is configured to implement the method embodiments.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the method embodiments. Details are not described herein again.

In several embodiments provided in this application, it should be understood that the disclosed system, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, an access network device, or the like) to perform all or some of the steps of the method described in embodiments of this application. The foregoing storage medium includes any medium that can store program code, for example, a USB flash drive, a removable hard disk, a ROM, a random access memory RAM, a magnetic disk, or an optical disc.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations, or equivalents that cover the scope of this application. Clearly, a person skilled in the art can make various modifications and variations to this application without departing from the spirit and scope of this application. This application is intended to cover these modifications and variations of this application provided that they fall within the scope of protection defined by the claims of this application and their equivalent technologies.

## Claims

1. A communication method, wherein the method comprises:
receiving, by a first network element, a first message, wherein the first message is used for handover of a terminal device, and a first user plane tunnel used to carry user plane data of the terminal device is established between the first network element and a serving user plane network element of the terminal device; and
sending, by the first network element, a first tunnel address of the first network element to a target access network device of the terminal device based on the first message, wherein the first tunnel address is used to establish a second user plane tunnel, and the second user plane tunnel is used to carry the user plane data of the terminal device between the target access network device and the first network element.

2. The method according to claim 1, wherein receiving, by the first network element, the first message comprises:
receiving, by the first network element, the first message from the target access network device, wherein the first message is a path switch request message.

3. The method according to claim 2, wherein the first message comprises a tunnel address of the target access network device, and the tunnel address of the target access network device is used to establish the second user plane tunnel.

4. The method according to claim 3, wherein sending, by the first network element, the first tunnel address of the first network element to the target access network device of the terminal device based on the first message comprises:
sending, by the first network element, the first tunnel address of the first network element to the target access network device based on the tunnel address of the target access network device.

5. The method according to claim 2 or 3, wherein sending, by the first network element, the first tunnel address of the first network element to the target access network device based on the first message comprises:
sending, by the first network element, first indication information to a mobility management network element based on the first message, wherein the first indication information indicates that handover of the terminal device between access network devices occurs within a service range of the first network element;
receiving, by the first network element, second indication information from the mobility management network element, wherein the second indication information indicates that a tunnel address of the user plane network element remains unchanged; and
sending, by the first network element, the first tunnel address of the first network element to the target access network device based on the second indication information.

6. The method according to claim 5, wherein the first indication information comprises a second tunnel address that is of the first network element and that corresponds to the first user plane tunnel and/or an identifier of the first network element.

7. The method according to claim 5 or 6, wherein the second indication information comprises a first tunnel address that is of the user plane network element and that corresponds to the first user plane tunnel.

8. The method according to any one of claims 2 to 7, wherein the first tunnel address of the first network element is the same as a third tunnel address that is of the first network element and that corresponds to a third user plane tunnel, and the third user plane tunnel is used to carry the user plane data of the terminal device between a source access network device of the terminal device and the first network element.

9. The method according to claim 1, wherein receiving, by the first network element, the first message comprises:
receiving, by the first network element, the first message from a source access network device of the terminal device, wherein the first message is a handover required message.

10. The method according to claim 9, wherein sending, by the first network element, the first tunnel address of the first network element to the target access network device of the terminal device based on the first message comprises:
sending, by the first network element, first indication information to a mobility management network element based on the first message, wherein the first indication information indicates that handover of the terminal device between access network devices occurs within a service range of the first network element;
receiving, by the first network element, a second tunnel address of the user plane network element from the mobility management network element, wherein the second tunnel address of the user plane network element is determined based on a first tunnel address that is of the user plane network element and that corresponds to the first user plane tunnel; and
sending, by the first network element, the first tunnel address of the first network element to the target access network device based on the second tunnel address of the user plane network element.

11. The method according to claim 10, wherein the first indication information is carried in a handover required message, and the second tunnel address of the user plane network element is carried in a handover request message.

12. The method according to any one of claims 9 to 11, wherein after sending, by the first network element, the first tunnel address of the first network element to the target access network device of the terminal device based on the first message, the method further comprises:
receiving, by the first network element, a tunnel address of the target access network device from the target access network device, wherein the tunnel address of the target access network device is used to establish the second user plane tunnel;
determining, by the first network element, a fourth tunnel address of the first network element based on the tunnel address of the target access network device, wherein the fourth tunnel address of the first network element is used to establish a fourth user plane tunnel, and the fourth user plane tunnel is used to carry the user plane data of the terminal device between the first network element and the user plane network element; and
sending, by the first network element, the fourth tunnel address of the first network element to the mobility management network element.

13. The method according to claim 12, wherein after sending, by the first network element, the fourth tunnel address of the first network element to the mobility management network element, the method further comprises:
receiving, by the first network element, third indication information from the mobility management network element, wherein the third indication information indicates to release a resource of a third user plane tunnel, and the third user plane tunnel is used to carry the user plane data of the terminal device between the source access network device and the first network element; and
releasing, by the first network element, the resource of the third user plane tunnel based on the third indication information.

14. The method according to any one of claims 1 to 12, wherein in a process in which the terminal device initiates registration, a tracking area update TAU, or a service request SR within a coverage range of the source access network device, the method further comprises:
receiving, by the first network element, the first tunnel address of the user plane network element from the mobility management network element, wherein the first tunnel address of the user plane network element is used to establish the first user plane tunnel;
determining, by the first network element, the third tunnel address of the first network element based on the first tunnel address of the user plane network element, wherein the third tunnel address of the first network element is used to establish the third user plane tunnel, and the third user plane tunnel is used to carry the user plane data of the terminal device between the source access network device and the first network element; and
sending, by the first network element, the third tunnel address of the first network element to the source access network device.

15. The method according to claim 14, wherein after sending, by the first network element, the third tunnel address of the first network element to the source access network device, the method further comprises:
receiving, by the first network element, a tunnel address of the source access network device from the source access network device, wherein the tunnel address of the source access network device is used to establish the third user plane tunnel;
determining, by the first network element, the second tunnel address of the first network element based on the tunnel address of the source access network device, wherein the second tunnel address of the first network element is used to establish the first user plane tunnel; and
sending, by the first network element, the second tunnel address of the first network element to the mobility management network element.

16. A communication method, wherein the method comprises:
receiving, by a first network element, a second message from a first access network device, wherein the second message is used to notify the first network element that the first access network device is to move out of a service area of the first network element, the first network element is configured to serve as a proxy for at least two access network devices to communicate with a mobility management network element, and the at least two access network devices comprise the first access network device; and
in response to the second message, when there is at least one access network device, in the at least two access network devices and other than the first access network device, whose coverage area is located within the service area, maintaining, by the first network element, a connection between the first network element and the mobility management network element; or when there is no access network device, in the at least two access network devices, whose coverage area is located within the service area, sending, by the first network element, a third message to the mobility management network element, wherein the third message is for releasing a connection between the first network element and the mobility management network element.

17. The method according to claim 16, wherein the second message comprises fourth indication information, the fourth indication information indicates that the first access network device is to move out of the service area of the first network element, and the fourth indication information is a tracking area identity TAI having a preset value and corresponding to an area covered by the first access network device before the first access network device moves out of the service area.

18. The method according to claim 16 or 17, wherein the method further comprises:
sending, by the first network element, a TAI corresponding to the service area to the mobility management network element.

19. The method according to claim 18, wherein the TAI corresponding to the service area comprises TAIs corresponding to coverage areas supported, in different service time periods, by each of the at least two access network devices.

20. The method according to any one of claims 16 to 19, wherein the method further comprises:
sending, by the first network element, fifth indication information to the mobility management network element, wherein the fifth indication information indicates that a coverage area indicated by the TAI corresponding to the service area is continuously covered by an access network device.

21. The method according to any one of claims 1 to 20, wherein the first network element is a proxy.

22. A communication method, wherein the method is applied to a case in which a terminal device requesting to be handed over from a source access network device to a target access network device, and comprises:
receiving, by a first network element, a fourth message from the source access network device, wherein the first network element is configured to serve as a proxy for the source access network device to communicate with a first mobility management network element corresponding to the first network element, and the fourth message comprises an identifier of the target access network device and a tracking area identity TAI corresponding to the target access network device; and
sending, by the first network element, an identifier of a second network element to the first mobility management network element based on the identifier of the target access network device and the TAI corresponding to the target access network device, wherein the second network element is configured to serve as a proxy for the target access network device and communicate with a second mobility management network element corresponding to the second network element.

23. The method according to claim 22, wherein sending, by the first network element, the identifier of the second network element to the first mobility management network element based on the identifier of the target access network device and a TAI corresponding to a coverage area of the target access network device comprises:
determining, by the first network element based on the TAI corresponding to the coverage area of the target access network device, that a coverage range of the target access network device is not within a service area of the first network element; and
sending, by the first network element, the identifier of the second network element to the first mobility management network element based on the identifier of the target access network device and a first correspondence, wherein the first correspondence comprises a correspondence between the target access network device and the second network element.

24. A communication method, wherein the method is applied to a case in which a terminal device requests to be handed over from a source access network device to a target access network device, and comprises:
receiving, by a first mobility management network element, an identifier of a second network element from a first network element, wherein the first network element is configured to serve as a proxy for the source access network device to communicate with the first mobility management network element, and the second network element is configured to serve as a proxy for the target access network device and communicate with a second mobility management network element corresponding to the second network element; and
sending, by the first mobility management network element, a fifth message to the second mobility management network element through the first network element and the second network element based on the identifier of the second network element, wherein the fifth message is for requesting the second mobility management network element to trigger handover of the terminal device to the target access network device.

25. The method according to any one of claims 22 to 24, wherein the first network element and the second network element are PROXY.

26. A communication apparatus, comprising a module configured to perform the method according to any one of claims 1 to 15 or 21, any one of claims 16 to 21, any one of claims 22, 23, and 25, or claim 24 or 25.

27. A communication apparatus, comprising a processor, wherein the processor is configured to run a computer program or instructions, to enable the method according to any one of claims 1 to 15 or 21, any one of claims 16 to 21, any one of claims 22, 23, and 25, or claim 24 or 25 to be implemented.

28. A communication chip, wherein the communication chip stores instructions, and when the chip runs on a communication device, the method according to any one of claims 1 to 15 or 21, any one of claims 16 to 21, any one of claims 22, 23, and 25, or claim 24 or 25 is implemented.

29. A communication system, comprising a first network element configured to perform the method according to any one of claims 1 to 15 or 21 or any one of claims claims 16 to 21.

30. A communication system, comprising a first network element configured to perform the method according to any one of claims 22, 23, and 25 and a first mobility management network element configured to perform the method according to claim 24 or 25.

31. A computer-readable storage medium, wherein the storage medium stores a computer program or instructions, and when the computer program or the instructions are executed by a communication apparatus, the method according to any one of claims 1 to 15 or 21, any one of claims 16 to 21, any one of claims 22, 23, and 25, or claim 24 or 25 is implemented.

32. A computer program product, comprising computer program code, wherein when the computer program code is run on a communication apparatus, the communication apparatus implements the method according to any one of claims 1 to 15 or 21, any one of claims 16 to 21, any one of claims 22, 23, and 25, or claim 24 or 25.
